(19) Europäisches Patentamt
European Patent Office
Office européen des brevets

(11) EP 1 111 872 A2

(12) EUROPEAN PATENT APPLICATION

(43) Date of publication:
**27.06.2001 Bulletin 2001/26**

(51) Int Cl.[7]: **H04L 29/06**

(21) Application number: **00311539.1**

(22) Date of filing: **21.12.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.12.1999 US 468978**

(71) Applicant: **Nortel Networks Limited**
**Montreal, Quebec H2Y 3Y4 (CA)**

(72) Inventors:
- **Akhtar, Haseeb**
  **Texas 75044 (US)**
- **Tummala, Rambabu**
  **Texas 75024 (US)**
- **Qaddoura, Emad A.**
  **Texas 75093 (US)**
- **Patil, Basavaraj B.**
  **Texas 75025 (US)**

(74) Representative: **Ertl, Nicholas Justin**
**Elkington and Fife,**
**Prospect House,**
**8 Pembroke Road**
**Sevenoaks, Kent TN13 1XR (GB)**

# (54) Utilizing internet protocol mobility messages and authentication, authorization and accounting messages in a communication system

(57) A system and method for utilizing internet protocol (IP) mobility messages and authentication, authorization, and accounting (AAA) messages in a communication system is presented. The communication system comprises a data network coupled to a visited network, a home network, and a service broker, where the visited network and the home network are each coupled to an access node. A serving mobility manager (SMM), which is located in the visited network, receives a user request for information via the access node. A local AAA, which is coupled to the SMM and located in the visited network, queries the service broker to determine the user's home network. The service broker is coupled to the visited network and the home network. A service broker AAA server, which is located in the service broker, contacts a home AAA server, which is located in the home network. The service broker AAA server establishes a trust relationship between the visited network and the home network by utilizing an extension of the IP mobility messages. These IP mobility extension messages are combined with the AAA messages to provide mobility functionality to the AAA messages. A home mobility manager (HMM), which is coupled to the home AAA server and is located in the home network, transmits to the user the information via the data network, the SMM, and the access node using the trust relationship.

Fig. 1

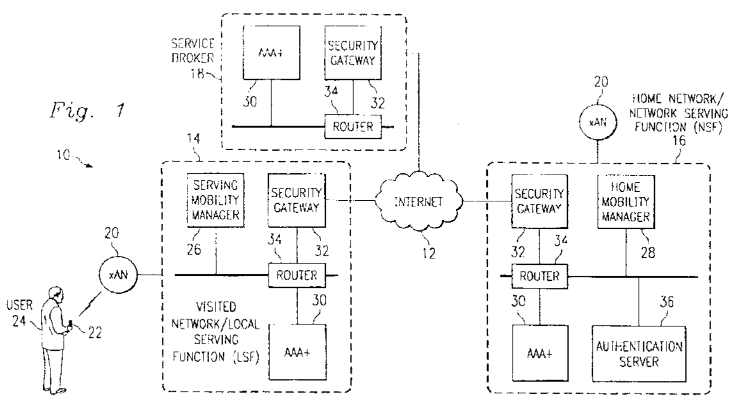


EP 1 111 872 A2

## Description

This application relates generally to utilizing internet protocol (IP) mobility messages and, more particularly, to utilizing an extension of the IP mobility messages to provide mobility functionality to Authentication, Authorization, and Accounting (AAA) messages.

The Internet Engineering Task Force (IETF) standards body has defined one AAA protocol called RADIUS and is currently defining another AAA protocol called DIAMETER.

Radius is a distributed security system which uses an authentication server to solve the security problems associated with remote computing. Distributed security separates user authentication and authorization from the communications process and creates a single, central location for user authentication data. Also, distributed security is a client/server approach which allows a number of communication servers, or clients, to authenticate a dial-in user's identity through a single, central database, or authentication server, which stores all information about users, their passwords, and access privileges. Distributed security is better than other types of security because of the central location for authentication data which makes it more secure than scattering information on different devices throughout a network. It is also scalable, which makes it conform to customers' client needs, and it is easier to manage with all the data in one, secure place.

Although Radius provides distributed security to a network, it has a number of limitations. Since Radius is not extensible, a limited amount of information can be transmitted via the Radius AAA messages. Additionally, mobility is not supported.

Diameter is an application layer protocol which provides a unified means for carrying different types of messages. Diameter consists of a base protocol and extensions that can be built on top of this base for specific tasks such as resource management and accounting extensions that provide functionality related to AAA as well as other services. For example, as the number of new internet services has increased, routers and network access servers have had to undergo re-engineering to support them. These new services could often benefit from a AAA protocol to facilitate off-loading policy information to an external server.

An example of such a service is dial-up internet access. Large internet service providers cannot bear the administrative burden to configure all of their users on each network access server every time a new device is deployed. In this scenario, Radius has been used successfully by many such internet service providers. New services such as Voice over IP, Fax over IP, and Mobile IP also require similar services in order to be able to authenticate, retrieve authorization information, and generate accounting records for billing purposes. A problem occurs when each service has its own policy protocol defined. This requires customers to deploy several policy servers, which increases the cost of administration and complicates deployment. Diameter offers a common solution by defining a base protocol that defines header formats (which are followed by objects), security extensions and requirements as well as a small number of mandatory commands and Attribute-Value-Pairs (AVPs). The AVPs are headers in which the objects are encapsulated. New services can extend Diameter by extending the base protocol to support new functionality.

Diameter, which is an evolution of Radius resolves some of the shortcomings of Radius and also offers a protocol that is extensible. Diameter does not, however, support mobility.

An IETF protocol known as Mobile IP supports mobility in IP networks through the use of datagrams. Information in an IP network is transferred as a sequence of datagrams which are collections of data that are sent as a single message. Each of these datagrams is sent through the network individually. Initially, a datagram, which is about to be delivered to a mobile node, arrives at a home network via standard IP routing. The datagram is then intercepted by a home agent and tunneled to a Care-Of-Address. The datagram is then detunneled and delivered to the mobile node. For datagrams sent by the mobile node, standard IP routing delivers each datagram to its destination. Although the Mobile IP protocol provides mobility functionality, it does not provide AAA functionality.

Certain IP networks include various entities (such as mobility managers and AAA servers) that need to communicate with different administrative domains or networks in various situations such as, for example, during a handoff. In such a scenario, both a handoff request and an authentication request will be made as the mobile node moves from one network to another. Thus, the Mobile IP protocol is best positioned to provide the mobility functionality (the handoff request) while the Diameter protocol is best positioned to provide the AAA functionality (the authentication). Utilizing both protocols results in various network limitations. For example, network delays may be experienced because two different protocols and thus two different sets of messages must be used to provide service to a roaming user. Further network capacity may be constrained because of design complexities associated with utilizing two different protocols.

Therefore, what is needed is a protocol that reduces or eliminates these limitations and design complexities by extending the IP mobility messages, where these IP mobility extension messages are combined with the AAA messages to provide mobility functionality to the AAA messages.

In response to these and other limitations, provided herein is a unique system and method for utilizing internet protocol (IP) mobility messages and Authentication, Authorization, and Accounting (AAA) messages in a communication system. The communication system comprises a data network coupled to a visited network, a home network, and a service broker, where the visited network and the home network are each coupled to an access node. In one embodiment, a Serving Mobility Manager (SMM), which is located in the visited network, receives a user request for information via the access node. A local AAA, which is coupled to the SMM and located in the visited network, queries the service broker to determine the user's home network. The service broker is coupled to the visited network and the home network. A service broker AAA server, which is located in the service broker, contacts a home AAA server, which is located in the home network. The service broker AAA server establishes a trust relationship between the visited network and the home network by utilizing an extension of the IP mobility messages. These IP mobility extension messages are combined with the AAA messages to provide mobility functionality to the AAA messages. A home mobility manager (HMM), which is coupled to the home AAA server and is located in the home network, transmits to the user the information via the data network, the SMM, and the access node using the trust relationship.

In some embodiments, the visited network queries the user's home network, via a pre-configured trust relationship.

In some embodiments, the visited network dynamically establishes (without a trust relationship) a relationship with the home network by utilizing the extension of the IP mobility messages.

In some embodiments, the user request is transmitted via a plurality of access protocols.

In some embodiments, the IP mobility extension messages comprise base AAA headers, message specific attribute value pairs, and message specific parameters.

In some embodiments, the IP mobility extension messages are created in the SMM.

In some embodiments, the IP mobility extension messages are created in the HMM.

Examples of the invention will now be described in detail with reference tothe accompanying drawings, in which:

Fig. 1 is a diagrammatic view of a communication system of the present invention.

Fig.2 is a diagrammatic view of the communication system of the present invention that depicts the transmission of IP mobility messages on the AAA protocol.

Fig.3 is a diagrammatic view of the communication system of the present invention that depicts the transmission of user requested information via the IP mobility messages on the AAA protocol.

Fig. 4 is a message flow of an Initial Registration where the mobile node is configured with a routable IP Address.

Fig. 5 is a message flow of an Initial Registration where the mobile node and the user's home network are configured with a non-routable IP Address.

Fig. 6 is a message flow of an Initial Registration where the mobile node does not have an IP Address and where the mobile node and the user's home network are configured with non-routable IP addresses.

Fig. 7 is a message flow of an Initial Registration with hierarchical routers.

Fig. 8 is a message flow of a mobile node moving to a new routing area on a new LSF.

Fig. 9 is a message flow of the mobile node moving to a new routing area

Fig. 10 is a message flow of a user roaming between routing areas within the same xAN/LSF.

Fig. 11 is a message flow of a user roaming to a new routing area where the mobile node's COA does not change.

Fig. 12 is a message flow of a user roaming back into their home network, where the network is a combined LSF/NSF.

Fig. 13 is a message flow of a user roaming between LSFs where the mobile node does not send a registration request message to the old LSF that indicates the the mobile node is about to move.

Fig. 14 is a message flow of a user terminating a connection to their service provider.

Fig. 15 is a message flow of a handoff between two LSFs.

Fig. 16 is a message flow of a handoff between two xANs on the same LSF.

Fig. 17 is a message flow of a handoff between two xANs on the same LSF.

Fig. 18 is a diagrammatic view of a computer of the present invention.

Fig. 19 is a flow chart of a method of the present invention for utilizing IP mobility messages and AAA messages.

Fig. 1 depicts a communication network (or system) 10 of the present invention that utilizes internet protocol (IP) mobility messages and Authentication, Authorization, and Accounting (AAA) messages. The network 10 includes a data network (such as the Internet) 12 that is coupled to a visited network 14, a user's 24 home network 16, and a service broker 18. The visited network 14 (or Local Serving Function (LSF)) and the home network 16 (or Network Serving Function (NSF)) are each coupled to an access node 20 which may be, for example, a remote access network or a dial-up modem. The access node 20 transmits messages between a mobile station (or mobile node) 22 and the various entities 12-18 in network 10. The messages perform certain functionality related to the user's 24 requests.

The messaging transmitted in the network 10 extends the functionality of AAA (originally designed for authentication, authorization, and accounting) to accomplish seamless mobility. The mobility extension to the AAA protocol is for the control plane messaging of the architecture. In current wireless networks, IS41 and MAP are the messaging protocols used for mobility and exist on top of SS7. AAA with the mobility extension will serve the same purpose in IP centric networks.

The LSF 14 is the serving area network and is the entity that permits the mobile station 22 to obtain access to the network 10. The NSF 16 is the home network of the mobile station 22 and is the entity where the user's 24 subscription exists. Control plane messaging to accomplish mobility between the LSF 14 and the NSF 16 is performed via AAA servers 30 (which are shown with a + denoting the fact that the mobility is performed by the AAA servers 30 using the IP mobility extension messages of the present invention). The AAA servers 30 provide a secure means of communication between the LSF 14 and NSF 16. The AAA server 30 itself does not have the capability to perform any specific task such as authentication or mobility. It is responsible for delivering or routing the messages to the appropriate entity that performs the specified task.

In the IP mobility architecture of the present invention, the mobility functions in the LSF 14 are performed by the Serving Mobility Manager (SMM) 26 and in the NSF 16 by the Home Mobility Manager (HMM) 28. Mobility messages are exchanged between SMM 26 and the HMM 28 (via the routers 34) in order to provide network access to a mobile user. An example of a mobility message exchanged between the SMM 26 and the HMM 28 is a Registration message. This message is constructed via the mobility extension to AAA of the present invention. This implies that a Registration message includes the base AAA headers and the Registration specific information defined by the mobility extension. The SMM 26 and the HMM 28 each relay messages to their AAA server 30 and rely on it 30 to perform delivery functionality. The message is routed to a particular AAA server based on the message type or on the user's 24 Network Access Identifier (NAI) which is similar to an email address. Since mobility control plane messages are delay sensitive, the choice of the transport protocol that the base AAA runs on is quite critical. The IP mobility architecture is a functional architecture and does not assign the task of the SMM 26 or HMM 28 to any specific platform. Hence, the SMM 26, HMM 28, and the AAA servers 30 can be distributed across various platforms in the network 10.

The AAA server 30 in NSF 16 also interfaces to an authentication server or center 36 that is responsible for authenticating the mobile station 22. AAA servers may interface to multiple other AAA servers via trust relationships or via service level agreements (SLAs). A trust relationship is established by the AAA server 30 in the service broker 18 when it 30 contacts the NSF 16. The trust relationship ensures that the messages are being transmitted over a secure path. After the trust relationship has been established between the LSF 14 and the NSF 16, subsequent messages to and from the LSF 14 and the NSF 16, do not need to establish another trust relationship via the service broker 18. Further, the trust relationship may be pre-configured.

A SLA may be established without the use of a service broker 18. As such, the LSF 14 dynamically establishes a relationship (without trust) with the NSF 16. In either scenario (trust relationship or SLA), the extension of the IP mobility messages of the present invention may be used. It is the responsibility of the AAA server to resolve the appropriate server to send the mobility messages to.

The functional elements performed by the AAA servers 30 include: proxying, message routing, interaction with the service broker 18, and security.

AAA servers 30 act as proxies for various network elements such as the SMM 26 and HMM 28. The term proxying is used when the AAA server 30 simply relays messages from one server to another. In the case of the AAA server in the LSF 14, it 30 plays the role of a proxy server to the SMM 26 for messages that are sent to the HMM 16 or to an authentication center elsewhere in the network. The proxy server takes on the task of relaying the message to the appropriate entity in the network from the SMM 26 or the HMM 28 where it can be processed. The proxy AAA server in the LSF 14 and the NSF 16 are responsible for making the routing decisions. The SMM 26 and the HMM 28 do not have to maintain information regarding the endpoints for delivery of messages. Rather, they interact with and permit their local AAA server to routing the messages to the appropriate entities.

The SMM 26 and HMM 28 communicate using the AAA servers that are local to them. The SMM 26 or HMM 28 messages do not have the IP address of their destination. Rather the destination address for messages from the SMM or the HMM is the IP address of the local AAA server that they are configured with. The IP mobility messages are proxied by AAA servers in the network and delivered to their final destination. The AAA servers 30 use the NAI Attribute-Value-Pair (AVP) contained in the messages and also the proxy state AVP for routing. The AVP contains an attribute code and its value.

The AAA server 30 in the LSF 14 may be configured with the address of the AAA server 30 in the NSF 16 with which it has a service/roaming agreement. However, from a scalability perspective, it is impractical that the AAA server in the LSF 14 will have a SLA with every other AAA server belonging to different service provider NSFs. Thus, service brokers 18 will establish SLAs with multiple service providers and other service brokers. An LSF, by establishing an SLA with a service broker, is able to indirectly establish SLAs with all other service providers that have agreements with the broker. When a mobility message of the present invention arrives at the AAA server and the server does not have an SLA with the domain that the message is destined for, then the AAA server may forward the message to a service broker 18 who may have an SLA with the domain associated with the message being sent.

Communication between AAA servers occurs over IPsec tunnels. Hence the AAA server provides security to messages that are exchanged between the LSF and NSF. IPsec is a network layer security mechanism that the AAA protocol, which is an application layer protocol, is unaware of. IPsec Securitry Asociations (SAs) are established between the AAA servers at the time an SLA is established between the two networks. Between the AAA servers in the LSF and the NSF or the service broker, transport mode security using an Authentication Header is used. The Security Gateways 32 at the edge of the network may have tunnel mode Encapsulating Security Payload (ESP) between the networks. The AAA servers may have both transport mode Authentication Headers and tunnel mode ESP.

Fig.'s 2 and 3 generically depict the transmission of the IP Mobility extension messages. The SMM 26 receives, via the access node 20, a user 24 request for information. The user request may be transmitted via a plurality of access protocols such as TDMA, CDMA, etc. The local AAA server queries the service broker 18 to determine the user's 24 home network. The service broker's 18 AAA server 30 contacts the home 16 AAA server. The service broker's 18 AAA server 30 establishes a trust relationship between the visited network and the home network by utilizing an extension of the IP mobility messages, where the IP mobility extension messages are combined with the AAA messages to provide mobility functionality to the AAA messages. The HMM 28 then transmits to the user 24, the information via the data network 12, the SMM 26, and the access node 20 using the trust relationship.

The IP mobility extension messages comprise base AAA headers, message specific attribute value pairs (AVPs), and message specific parameters, and may be created in the SMM and in the HMM.

The mobile IP extension of the AAA protocol defines a method that allows a mobile station 22 to change its point of attachment to the Internet 12 without service disruption. Mobile IP is an extension to the Diameter server that allows cross-domain authentication and authorization, assignment of a mobile station's home address, assignment of a Home Agent, and key distribution to provide mobile IP services in a large network.

The IP Mobility extension of the present invention defines the messages and AVPs to support mobility in the IP Mobility Architecture. These IP Mobility extension messages, which run on top of the base AAA protocol, are presented below:

**Registration Messages**

1. Registration Request
2. Registration Response
3. Registration Cancellation
4. Registration Cancellation Acknowledge
5. Address Update Request
6. Address Update Response

**Inter-LSF Messages**

7. Context Request
8. Context Response
9. Binding Update
10. Binding Update Response

**Proxy/Broker Messages**

11. Discover Request
12. Discover Response

**Other Messages**

13. Correspondent Node List
14. Correspondent Node List Acknowledge

Table 1 defines the Diameter commands for IP Mobility messages and their respective command codes. A Diameter entity supporting IP Mobility Extension supports these commands.

Table 1:

| IP Mobility Extension command list | |
|---|---|
| **Command AVP Name** | **Command AVP Code** |
| Registration Request Command | 335 |
| Registration Response Command | 336 |
| Context Request Command | 337 |
| Context Response Command | 338 |
| Registration Cancellation Command | 339 |
| Registration Cancellation Ack Command | 340 |
| Binding Update Command | 341 |
| Binding Update Response Command | 342 |
| Correspondent Node List Command | 343 |
| Correspondent Node List Ack Command | 344 |
| Discover Request Command | 345 |
| Discover Response Command | 346 |
| Address Update Request Command | 347 |
| Address Update Response Command | 348 |

Table 2 provides the general format of the IPM Command Code AVP. The flag bits P, T, and V must not be set, flag bits E and H may be set depending on the security model used, and flag bit M must be set.

Table 2:

| IP Mobility Command code format | | | | | | | |
|---|---|---|---|---|---|---|---|
| AVP Code: 256 | | | | | | | |
| AVP length: 12 | Reserved | (P) | (T) | (V) | [E] | [H] | <M> |
| Command Code: Any of the above | | | | | | | |

Table 3 defines the unique AVPs required for the IP Mobility messages. These AVPs are used in the various IP Mobility extension messages that will be described in relation to Fig.'s 4-17:

Table 3:

| New AVPs for IP Mobility Extension | |
|---|---|
| **AVP Name** | **AVP Code** |
| Protocol Version | 361 |
| LSF NAI | 362 |
| MS IP Address | 363 |
| Care Of Address (IP Address) | 364 |
| Profile type | 365 |
| Profile | 366 |
| Terminal Type | 367 |
| Signal Strength | 368 |

Table 3: (continued)

| New AVPs for IP Mobility Extension | |
|---|---|
| **AVP Name** | **AVP Code** |
| Service Level Request | 369 |
| Authorization Period (Registration) | 370 |
| Service Level Information | 371 |
| CN IP List | 372 |
| L2 Address of MS | 373 |
| HMM NAI | 374 |
| Context Data AVP | 375 |
| IPM Response Code | 376 |
| Routing Area | 377 |
| Registration Type | 378 |
| Context Request Type | 379 |
| Source NAI | 380 |
| Destination NAI | 381 |

Table 4 displays the list of AVPs that are included in the IP Mobility architecture:

Table 4:

| Implementation Status of IP Mobility Extension AVPs | |
|---|---|
| **No.** | **AVP Name** |
| 1. | Registration Request Command |
| 2. | Registration Response Command |
| 3. | Address Update Request Command |
| 4. | Address Update Response command |
| 5. | Context Request Command |
| 6. | Context Response Command |
| 7. | Registration Cancellation Command |
| 8. | Registration Cancellation Ack Command |
| 9. | Binding Update Command |
| 10. | Binding Update Response Command |
| 11. | Discover Request Command |
| 12. | Discover Response Command |
| 13. | Correspondent Node List Command |
| 14. | Correspondent Node List Ack Command |
| 15. | Protocol Version |
| 16. | LSF NAI |
| 17. | MS IP Address |
| 18. | Care Of Address |
| 19. | Profile type |

Table 4: (continued)

| Implementation Status of IP Mobility Extension AVPs | |
|---|---|
| **No.** | **AVP Name** |
| 20. | Profile |
| 21. | Terminal Type |
| 22. | Signal Strength |
| 23. | Service Level Request |
| 24. | Authorization Period (Registration) |
| 25. | Service Level Information |
| 26. | CN IP List |
| 27. | L2 Address of MS |
| 28. | HMM NAI |
| 29. | Context Data |
| 30. | IPM Response Code |
| 31. | Routing Area |
| 32. | Registration Type |
| 33. | Context Request Type |
| 34. | De-Registration Result Code |
| 35. | Source NAI |
| 36. | Destination NAI |

The IP Mobility extension messages listed in Table 1 are described below:

Registration Request - This message is used by the SMM to establish a data packet session with the user's home network. This message follows the Authentication procedure. The Registration Request message is sent to the local AAA server by the SMM, which forwards it to the Home AAA server. The Home AAA server then forwards it to the HMM. The Parameters of the Registration Request message are:

a. User NAI
b. IP Address of Mobile Node (Home IP Address).
c. LSF NAI
d. Care of Address of Mobile Node
e. Profile type
f. Terminal type
g. Service Level Request
h. Signal Strength
i. Protocol version
j. Destination NAI
k. Source NAI
l. Time Stamp

| |
|---|
| <Diameter Header> |
| <RR Command AVP> |
| < User NAI > |
| <MS IP Address> |
| [LSF NAI] |
| [Care of Address of Mobile Node] |
| [Profile Type] |
| <Terminal Type> |
| [Service Level Request] |
| [Signal Strength] |
| [Destination NAI] |
| <Source NAI> |
| <Time Stamp> |
| [Protocol Version] |
| {<Integrity-Check-Vector AVP> \|\| <Digital-Signature AVP>} |

Registration Response - The HMM 28 generates a Registration Response message in response to a Registration Request message and sends it to the AAA server at the NSF 16, which forwards it to the LSF 14 AAA server. The LSF 14 AAA server then forwards it to the SMM 26. The Parameters of the Registration Response message are:

a. User NAI
b. IP Address
c. Profile
d. COA Required
e. Response code
f. Authorization Period

| |
|---|
| <Diameter Header> |
| <Response Command AVP> |
| < User NAI > |
| <MS IP Address> |
| <Response Code> |
| [Profile] |
| [COA Required] |
| [Authorization Period] |
| [Destination NAI] |
| <Source NAI> |
| <Time Stamp> |
| [Service Level Information] |
| {<Integrity-Check-Vector AVP> \|\| <Digital-Signature AVP>} |

Address Update Request - This message is used by the SMM 26 to inform the HMM 28 of the co-located IP address assigned to the MN 22. This is necessary if the MN 22 is configured with a non-routable IP address and the HMM requested the SMM to allocate a COA in a Registration Response message. This message also needs to be sent when the MN 22 is roaming between RAs (Routing Areas). The SMM sends the message to the local AAA server, which forwards the message to the Home AAA server. The Home AAA server then forwards it to the HMM 28. The Parameters of the Address Update Request message are:

a. User NAI
b. Co-located COA
c. Destination NAI
d. Source NAI
e. Time Stamp

| |
|---|
| <Diameter Header> |
| <AU Command AVP> |
| < User NAI > |
| [Destination NAI] |
| <Source NAI> |
| <Time Stamp> |
| <Co-located COA> |
| {<Integrity-Check-Vector AVP> \|\| <Digital-Signature AVP>} |

Address Update Response - The HMM 28 generates an Address Update Response message in response to an Address Update Request message and sends it to the AAA server at the NSF 16, which forwards it to the LSF 14 AAA server. The LSF 14 AAA server then forwards it to the SMM 26. The Parameters of the Address Update Response message are:

a. User NAI
b. Response Code
c. Destination NAI
d. Source NAI
e. Time Stamp

| |
|---|
| <Diameter Header> |
| <AU Response Command AVP> |
| < User NAI > |
| [Destination NAI] |
| <Source NAI> |
| <Time Stamp> |
| < Response Code> |
| {<Integrity-Check-Vector AVP> \|\| <Digital-Signature AVP>} |

Context Request - The SMM 26 sends the Context Request message to request the MN 22 information (session context information) from the old (previous) LSF 14. The SMM 26 sends this message to the local AAA server, which forwards it to the previous LSF 14 AAA server. The previous LSF 14 AAA server then forwards to its SMM 26. This message triggers the buffering of data at the previous LSF. The Parameters of the Context Request message are:

a. Previous LSF NAI
b. User NAI
c. L2 Address of MS
d. Context Request Type
f. Destination NAI
g. Source NAI
h. Time Stamp

| |
|---|
| <Diameter Header> |
| <CR Command AVP> |
| <Previous LSF NAI> |
| [Context Request Type] |
| < User NAI > |
| [Destination NAI] |
| <Source NAI> |
| <Time Stamp> |
| <L2 Address of MS> |
| {<Integrity-Check-Vector AVP> \|\| <Digital-Signature AVP>} |

Context Response - The previous SMM sends the Context Response message to the current SMM in response to the Context Request Message. The SMM sends the Context Response message to the local AAA server, which forwards it to the current LSF AAA server. The current LSF AAA server then forwards it to its SMM. The Parameters of the Context Response message are:

a. Current LSF NAI
b. User NAI
c. MS IP address
d. Response Code
e. Context Data
f. Destination NAI
g. Source NAI
h. Time Stamp

| |
|---|
| <Diameter Header> |
| <CR Response Command AVP> |
| <Current LSF NAI> |
| < User NAI > |
| [Context Data] |
| <Response Code AVP> |
| [Destination NAI] |
| <Source NAI> |
| <Time Stamp> |
| <MS IP Address> |
| {<Integrity-Check-Vector AVP> \|\| <Digital-Signature AVP>} |

Registration Cancellation - The Registration Cancellation message is used by the HMM 28 to cancel the registration of the user 24 at the LSF 14. This message is used when user roams from LSF to LSF. In this scenario, the HMM sends the Registration Cancellation message to cancel the registration at the previous LSF. The HMM sends the message to the local AAA server, which then forwards it to. The previous LSF AAA server then forwards to its SMM. The Parameters of the Registration Cancellation message are:

a. LSF NAI
b. User NAI
c. L2 Address
d. MS IP Address
e. HMM NAI
f. Destination NAI
g. Source NAI
h. Time Stamp

| |
|---|
| <Diameter Header> |
| <RC Command AVP> |
| <Current LSF NAI> |
| < User NAI > |
| <L2 Address> |
| <MS IP Address> |
| [Destination NAI] |
| <Source NAI> |
| <Time Stamp> |
| [HMM NAI] |
| {<Integrity-Check-Vector AVP> \|\| <Digital-Signature AVP>} |

Registration Cancellation Acknowledge - The Registration Cancellation Acknowledge message is sent from the LSF 14 to the HMM 28 to acknowledge the canceled registration of the user 24. The Parameters of the Registration Cancellation Acknowledge message are:

a. User NAI
b. Destination NAI
c. Source NAI
d. Time Stamp

| |
|---|
| <Diameter Header> |
| <RC Ack. Command AVP> |
| < User NAI > |
| [Destination NAI] |
| <Source NAI> |
| <Time Stamp> |
| {<Integrity-Check-Vector AVP> \|\| <Digital-Signature AVP>} |

Binding Update Request - The SMM sends the Forward Packet Request message to request the MS's 22 buffered packets from the old (previous) LSF. The MM sends the Forward Packet Request message to the local AAA server, which forwards it to the previous LSF AAA server. The previous LSF AAA server then forwards it to its SMM. This message triggers the forwarding buffered packet to the new MS 22 IP address. The Parameters of the Context Request message are:

a. LSF NAI
b. User NAI
c. MS IP Address
d. Destination NAI
e. Source NAI
f. Time Stamp

| |
|---|
| <Diameter Header> |
| <FP Request command AVP> |

| |
|---|
| < LSF NAI> |
| < User NAI > |
| [Destination NAI] |
| <Source NAI> |
| <Time Stamp> |
| <MS IP Address> |
| {<Integrity-Check-Vector AVP> \|\| <Digital-Signature AVP>} |

Binding Update Response - The previous SMM sends the Forward Packet Response message to the current SMM in response to the Forward Packet Request message. The SMM sends the Forward Packet Response message to the local AAA server, which forwards it to the current LSF AAA server. The current LSF AAA server then forwards to its SMM. The Parameters of the Forward Packet Response message

a. User NAI
b. Response Code
c. Destination NAI
d. Source NAI
e. Time Stamp

| |
|---|
| <Diameter Header> |
| <Binding Update Response Command AVP> |
| < User NAI > |
| [Destination NAI] |
| <Source NAI> |
| <Time Stamp> |
| <Response Code> |
| {<Integrity-Check-Vector AVP> \|\| <Digital-Signature AVP>} |

Discover Request - The SMM sends the Discover Request message to the Service Broker 18 when no SLA (Service Level Agreement) exists between the visited network 14 and the user's 24 home network 16. The SMM sends the Discover Request message to the local AAA server, which forwards it to the Service Broker's AAA server. The service broker's AAA server then sends it to the Broker's Manager. The Parameters of Discover Request message are:

a. User NAI
b. Destination NAI

c. Source NAI
d. Time Stamp

| |
|---|
| <Diameter Header> |
| <Discover Request Command AVP> |
| [Destination NAI] |
| <Source NAI> |
| <Time Stamp> |
| < User NAI > |
| {<Integrity-Check-Vector AVP> ‖ <Digital-Signature AVP>} |

Discover Response - The Broker Manager, in response to the Discover Request message from the SMM, sends the Discover Response message. The Broker Manager sends the message to its local AAA server, which sends it to the LSF AAA server. The LSF AAA server then sends it to the SMM. The Parameters of Discover Response message are:

a. User NAI
b. HA Address
c. Shared Keys
d. Destination NAI
e. Source NAI
f. Time Stamp

| |
|---|
| <Diameter Header> |
| <Discover Response Command AVP> |
| < User NAI > |
| <HA Address> |
| [Destination NAI] |
| <Source NAI> |
| <Time Stamp> |
| <Shared Keys> |
| {<Integrity-Check-Vector AVP> ‖ <Digital-Signature AVP>} |

Correspondent Node List - The Correspondent Node List message is sent from the SMM to the HMM to indicate to the MS 22 the list of corresponding nodes (IP Addresses) that currently have TCP/UDP sessions. The Registration Request message is sent to the local AAA server by the SMM, which forwards it to the Home 16 AAA server. The Home 16 AAA server then forwards it to the HMM. This message invokes the HMM to send binding update messages to corresponding nodes. The parameters of the Correspondent Node List message are:

a. User NAI
b. Correspondent Node IP List
c. Destination NAI
d. Source NAI

e. Time Stamp

| |
|---|
| <Diameter Header> |
| <CN List Command AVP> |
| < User NAI > |
| [Destination NAI] |
| <Source NAI> |

| |
|---|
| <Time Stamp> |
| <Correspondent Node IP List> |
| {<Integrity-Check-Vector AVP> \|\| <Digital-Signature AVP>} |

Correspondent Node List Acknowledge - The HMM generates the Correspondent Node List Acknowledge message in response to the Correspondent Node List message and sends it to the AAA server at the NSF, which forwards it to the LSF AAA server. The LSF AAA server then forwards it to the SMM. The parameters of the Correspondent Node List Acknowledge message are:

a. User NAI
b. Response Code
c. Destination NAI
d. Source NAI
e. Time Stamp

| |
|---|
| <Diameter Header> |
| <CN List Command Ack AVP> |
| < User NAI > |
| [Destination NAI] |
| <Source NAI> |
| <Time Stamp> |
| <Correspondent Node List Result Code> |
| {<Integrity-Check-Vector AVP> \|\| <Digital-Signature AVP>} |

Address Update Request - The Address Update List Request message is sent from the HMM to the SMM in order for the SMM to allocate an address to the MS. The parameters of the Address Update Request message are:

a. User NAI
b. MS IP Address
c. Care Of Address
d. Destination NAI
e. Source NAI

f. Ti me Stamp

| |
|---|
| <Diameter Header> |
| <Address Update Request Command AVP> |
| <MS IP Address> |
| <Care Of Address> |
| < User NAI > |
| [Destination NAI] |
| <Source NAI> |
| <Time Stamp> |
| {<Integrity-Check-Vector AVP> \|\| <Digital-Signature AVP>} |

Address Update Response - The Address Update List Response message is sent from the SMM to the HMM with the allocated MS address in response to the Address Update Request message from the HMM. The parameters of the Address Update Response message are:

g. User NAI
h. Response Code
i. MS IP Address
j. Destination NAI
k. Source NAI
l. Time Stamp

| |
|---|
| <Diameter Header> |
| <Address Update Request Command AVP> |
| <MS IP Address> |
| <Response Code> |
| < User NAI > |
| [Destination NAI] |
| <Source NAI> |
| <Time Stamp> |
| {<Integrity-Check-Vector AVP> \|\| <Digital-Signature AVP>} |

Fig.'s 4-17 depict various mobility message flows utilizing the IP mobility messages described above. A few observations regarding the message flows include: wireless network access (data) is provided to users that may not have a subscription with a specific wireless network provider; a user's home network should create SLAs with all networks, LSFs and Service Brokers, it wants its users to roam in; IPSec AH and/or ESP are used for security associations; the AAA protocol is used for LSF to LSF and LSF to NSF mobility functions; for private network access, the tunneling is layer 3 (IP tunneling); there is no triangle routing unless there is a NSF 'hide the user' policy. Therefore, an LSF will maintain COAs for its network.

The message flows describe three various mobility scenarios including user registrations (Fig.'s 4-7), users roaming to new routing areas where there are no applications running (no data being transferred) (Fig.'s 8-14), and users roaming to new routing areas where there are applications running (handoffs) (Fig.'s 15-17).

The message flows assume that: there is at least one router at the edge of the xAN/LSF interface and the IP router is considered to be part of the xAN; all messages sent between the system components include parameters. However, the depicted messages do not include every parameter that will be sent by the originating component. The parameters shown are used to help understand the flows; the AAA server located in the LSF has full functionality, i.e., it has knowledge of the SLAs between itself and the NSFs and provides a mechanism for determining where a user's home AAA server is. It should also be assumed that service agreements have all been pre-established; the xAN's broadcast control channels are broadcasting the IP address of the SMM, unless otherwise stated; the xANs are channelized RANs (such as TDMA) unless otherwise stated; in handoff scenarios for channelized RANs, the RAN will be responsible for buffering datagrams that are destined for the MN 22. In unchannelized RANs, the router at the RAN/LSF will be responsible for buffering.

The flow in Fig. 4 describes an initial registration where the MN 22 is configured with a routable IP Address. The user 24 is establishing a packet data session (logging in) to their home network 16. The MN 22 is configured with a permanent IP address that is associated with the user's home network 16. The home network is configured with routable IP addresses.

This flow applies to the scenarios when the MS is initially powered on and when a user wants to connect to another service provider. It is expected a user wants to establish a connection with their home network when the MN powers on. This is the concept of 'always on, always ready to receive/send data'. Therefore the MN is configured to establish a connection to a particular service provider when the MN powers on.

When the user wants to connect to another service provider, they will initiate the connection by accessing a user interface or by pushing a pre-configured button on the MN 22 (or by some other means). This process will cause the MN to send a Registration Request message to the user's home network.

After the registration process is completed, the user/LSF is said to have a packet data session established with the user's home network. Each message flow is described through the use of alphabetized letters that coincide with similar letters in the appropriate figures. The flow begins when:

a) the user has powered on the MN (or initiated another service provider connection request). The MN is configured to send a registration message to the user's home network. The registration message is sent to the IP address (which is the IP address of the SMM) that was contained in the broadcast control channel (BCCH). The following parameters are included in the registration message:

- The *NAI* indicates the user who wants to establish the data session.
- The *IP Addr* is the MN's configured permanent IP address. This parameter will not be included if the MN does not have a configured IP address.
- The *Profile Type* indicates the profile that the user wants to use. The profile may indicate the type of services the user has, type of access into the network, etc.
- The *Auth* parameter is the user's authentication parameter. In this architecture, it is the user's digital signature.
- The *Terminal Info* parameter contains information about capabilities of the terminal, e.g., L2 address, SIP supported, H.323 supported, etc.
- The *RegType* parameter indicates the type of registration being performed.
- The *RA* parameter indicates the name (NAI) of the current subnet point of attachment. The subnet is the logical or physical entry in the larger network.

b) The SMM creates a AAA Authentication Request and forwards it to the LSF's local AAA server.

c) The local AAA server uses the domain portion of the user's NAI to determine the home system of the user. A lookup is performed to determine the IP address of the user's home AAA server and the type of security association (SA) established between the LSF and NSF. This architecture recommends the use of IPSec authentication (AH) for security. The local AAA server will then send the message to the user's home AAA server. Before the packet is sent, an IPSec authentication is performed on the message.

d) The user's home AAA server receives the message. The AAA server will first validate the IPSec AH. It then performs a lookup to see to which server it should forward the message. Since this is an authentication request, it forwards the message to the Authentication Server.

e) The authentication server authenticates the user. The authentication server may perform several functions, all depending on the type of authentication. The architecture recommends the use of digital signatures, so the authentication server would have received the user's digital signature. In this case, the authentication server would consult a directory to acquire the user's public key, which it would use to authenticate the user. In this case, the user has been authenticated. The authentication server then creates an authentication response message that includes the user's NAI and a flag that indicates the authentication passed. The authentication server then sends an authentication response to its home AAA server. It may be possible for the authentication server to send the LSF information that will allow the LSF to authenticate the user while the user roams in the LSF. However, the LSF must be able to support the authentication mechanism required by the user.

f) The home AAA server will create an IPSec AH and send the message to the local AAA server serving the user.

g) The local AAA server validates the IPSec AH and passes the message on to the SMM.

h) The SMM now needs to establish the packet data session with the user's home network. This is achieved by sending the home network a registration request. The following parameters are added to the registration message:

- The *LSF Info* will contain information about the LSF and user mobility.
- The *COA* is the IP address that is used by the home network router and correspondent nodes to tunnel datagrams to the MN/LSF. There is an indication of the type of COA (a router COA or the MN co-located COA).

i) The local AAA server uses the domain portion of the user's NAI to determine the home system of the user. A lookup is performed to determine the IP address of the user's home AAA server and the type of security association (SA) established between the LSF and NSF. The local AAA server will then send the message to the user's home AAA server. Before the packet is sent, an IPSec authentication (AH) is performed on the message.

j) The user's home AAA server receives the message. The AAA server will first validate the IPSec AH. It then performs a lookup to see what server it should forward the message to. Since this is a registration request, it forwards the message to the HMM.

k) The HMM will perform the following functions:

- Update the local directory with the LSF and mobility info.
- Send a route update message to the local router so it can update the MN's IP address and COA.
- The HMM then creates a registration response message that includes the user's NAI and the user's profile. The profile will contain, at a minimum, the max bandwidth to be allocated to the user. The HMM then sends the registration response to its home AAA server.

l) The AAA server will create an IPSec AH and send the message to the local AAA server serving the user.

m) The local AAA server validates the IPSec AH and passes the message on to the SMM.

n) The SMM informs the xAN of User's NAI, User's IP address and MN's layer 2 address. The xAN uses this information to route information to the MN.

o) The SMM will update its local directory with the appropriate info. It will also update the policy database with the user's max bandwidth allowed. The SMM may create an encryption key to be used by the user's MN for over the air encryption. The SMM will send a registration reply to a mobility agent on the xAN/LSF router.

p) The mobility agent at the xAN/LSF router must update the router's routing table to include the MN's IP address. The xAN must be told of the 'binding' between the MN's IP Address and the MN's L2 Address. The mobility agent then sends the registration reply to the MN.

The flow in Fig. 5 describes an Initial Registration where the MN and the user's home network are configured with a non-routable IP Address. The main difference between this flow and the flow associated with Fig. 4 is that the MN must be allocated a co-located COA, i.e., an IP address that can be used nodes on the internet to tunnel datagrams directly to the MN.

This flow also applies to the scenarios when the MN initially powers on and when the user wants to connect to another service provider.

The user has powered on the MN (or initiated another service provider connection request). The MN is configured to send a Registration message to the user's home network. The Registration message is sent to the IP address (which is the IP address of the SMM) that was contained in the BCCH.

a) The authentication procedure is performed.

b) The SMM now needs to establish the packet data session with the user's home network. This is achieved by sending the home network a registration request. The following parameters are added to the registration message:

- The *LSF Info* will contain information about the LSF and user mobility.
- The *COA* is the IP address that is used by the home network router and correspondent nodes to tunnel datagrams to the MN/LSF. There is an indication of the type of COA (not co-located).

c) The local AAA server uses the domain portion of the user's NAI to determine the home system of the user. A lookup is performed to determine the IP address of the user's home AAA server and the type of security association (SA) established between the LSF and NSF. The local AAA server will then send the message to the user's home AAA server. Before the packet is sent, an IPSec authentication (AH) is performed on the message.
d) The user's home AAA server receives the message. The AAA server will first validate the IPSec AH. It then performs a lookup to see what server it should forward the message to. Since this is a registration request, it forwards the message to the HMM.
e) The HMM will perform the following functions:

- Update the local directory with the LSF and mobility info.
- The HMM realizes that the COA is not a MN co-located COA which is necessary for MN's that are associated with private networks with non-routable IP addresses. The HMM then creates a registration response message that includes the user's NAI, the user's profile, and an indication that a MN co-located COA must be allocated. The HMM then sends the registration response to its home AAA server and a request for a co-located IP address. The HMM then sends the registration response to its home AAA server.

f) The AAA server will create an IPSec AH and send the message to the local AAA server serving the user.
g) The local AAA server validates the IPSec AH and passes the message on to the SMM.
h) The SMM will update its local directory with the appropriate info. It will also update the policy database with the user's max bandwidth allowed. The SMM realizes it must allocate a co-located IP address for the MN. A request is made to DHCP to allocate the address. The SMM creates an address update request message with the MN co-located COA in it to send to the HMM. The message is forwarded to the local AAA server.
i) The local AAA server uses the domain portion of the user's NAI to determine the home system of the user. A lookup is performed to determine the IP address of the user's home AAA server and the type of security association (SA) established between the LSF and NSF. The local AAA server will then send the message to the user's home AAA server. Before the packet is sent, an IPSec authentication (AH) is performed on the message.
j) The user's home AAA server receives the message. The AAA server will first validate the IPSec AH. It then performs a lookup to see what server it should forward the message to. Since this is an address update request, it forwards the message to the HMM.
k) The HMM will perform the following functions:

- Send a route update message to the local router so it can update the MN's IP address and MN co-located COA.
- The HMM then creates an address update response message that includes the user's NAI. The HMM then sends the message to its home AAA server.

l) The AAA server will create an IPSec AH and send the message to the local AAA server serving the user.
m) The local AAA server validates the IPSec AH and passes the message on to the SMM.
n) The SMM will update its local directory with the appropriate info. The SMM may create an encryption key to be used by the user's MN. The SMM will send a registration reply to a mobility agent on the xAN/LSF router.
o) The mobility agent at the xAN/LSF router must update the router's routing table to include the MN's IP address. The xAN must be told of the 'binding' between the MN's IP Address and the MN's L2 Address. The mobility agent then sends the registration reply to the MN.

The flow in Fig. 6 describes an Initial Registration where the MN does not have an IP Address and where the MN and the user's home network are configured with non-routable IP addresses. The main difference between this flow and the flow associated with Fig. 4 is that the MN is not configured with an IP address. However, the home network is configured with routable IP addresses and will allocate a routable IP address to the MN. This flow also applies to the scenarios when the MN is initially powered on and when a user wants to connect to another service provider.

a) The user has powered on the MN (or initiated another service provider connection request). The MN is configured to send a registration message to the user's home network. The registration message is sent to the IP address (which is the IP address of the SMM) that was contained in the BCCH. The MS IP Address should be set to zero (0.0.0.0).
b) The authentication procedure is performed.
c) The SMM now needs to establish the packet data session with the user's home network. This is achieved by sending the home network a registration request. The following parameters are added to the registration message:

- The *LSF Info* will contain information about the LSF and user mobility.

- The *COA* is the IP address that is used by the home network router and correspondent nodes to tunnel datagrams to the MN/LSF. There is an indication of the type of COA (not co-located).

d) The local AAA server uses the domain portion of the user's NAI to determine the home system of the user. A lookup is performed to determine the IP address of the user's home AAA server and the type of security association (SA) established between the LSF and NSF. The local AAA server will then send the message to the user's home AAA server. Before the packet is sent, an IPSec authentication (AH) is performed on the message.
e) The user's home AAA server receives the message. The AAA server will first validate the IPSec AH. It then performs a lookup to see what server it should forward the message to. Since this is a registration request, it forwards the message to the HMM.
f) The HMM will perform the following functions:

- Update the local directory with the LSF and mobility info.
- Since the MN does not have a permanent IP address, the HMM will allocate an IP address via DHCP for the MN. The MN IP address is dynamically updated in the home network's DNS.
- Send a route update message to the local router so it can update the MN's IP address and COA.
- The HMM then creates a registration response message that includes the user's NAI, the user's profile, and the newly created MN IP address. The HMM then sends the registration response to its home AAA server.

g) The AAA server will create an IPSec AH and send the message to the local AAA server serving the user.
h) The local AAA server validates the IPSec AH and passes the message on to the SMM.
i) The SMM will update its local directory with the appropriate info. It will also update the policy database with the user's max bandwidth allowed. The SMM realizes that the MN does not have an IP address. The SMM will send a registration reply to a mobility agent on the xAN/LSF router. The SMM will include the MN's layer 2 address in the reply. The xAN will use the layer 2 address to send the registration reply.
j) The mobility agent at the xAN/LSF router must update the router's routing table to include the MN's IP address. The xAN must be told of the 'binding' between the MN's IP Address and the MN's L2 Address. The mobility agent 'updates' the datagram's destination address to be a broadcast address sends the registration reply to the xAN software and includes the MN's L2 address so the xAN can route it to the MN. NOTE: If the xAN is an Ethernet access point, the broadcast message will be sent to all MNs on the link.

The flow in Fig. 7 depicts an Initial Registration with hierarchical routers. The user is connecting to his/her home network where the home network is configured with routable IP addresses. The main difference between this flow and Fig. 4 is that there is a hierarchy of routers in the LSF/xAN. In particular, the xAN has a router at the edge of the xAN/LSF interface and there is another router, called the LSF router, which has a COA that is used to tunnel datagrams to.

a) The user has powered on the MN (or initiated another service provider connection request). The MN is configured to send a registration message to the user's home network. The registration message is sent to the IP address (which is the IP address of the SMM) that was contained in the BCCH.
b) The authentication procedure is performed.
c) The registration procedure is performed. The COA sent in the registration message is the COA of the LSF router.
d) The SMM will update its local directory with the appropriate info. The SMM will send a registration reply to a mobility agent on the xAN/LSF router.
e) The mobility agent at the xAN/LSF router must update the router's routing table to include the MN's IP address. When this occurs, some routing protocol, e.g., RIP, will update the local network with routing information so datagrams can be delivered to the xAN router, i.e., the LSF router will receive a route update and will know how to forward detunneled datagrams. The xAN must be told of the 'binding' between the MN's IP Address and the MN's L2 Address. The mobility agent then sends the registration reply to the MN.

The discussion now turns to the scenario where users are roaming to new routing areas where there are no applications running (no data being transferred). When a user roams between LSFs, the user changes subnet points-of-attachments (it changes routing areas - RAs). The LSF needs to know about the RA changes for the following reasons: the LSF may want to re-authenticate the user to avoid fraudulent users (in an IP centric network, it is advisable to always have the LSF authenticate the user); the user may have access restrictions within this RA; and a different IP router may need to provide tunneling services, via a new COA, to the MN while it is in the new RA.
In the architecture of the present invention, before the MN moves to the new LSF, it will send a registration request message to old LSF that indicates the MN is about to move to the new LSF. This triggers the old LSF to start queuing MN datagrams.

When the registration process is invoked, it may be necessary to perform registration for multiple users, all of whom may be registered with their respective ISPs. There are several alternatives for this scenario:

- Have the MN send a registration message for each NAI that is in an active packet data session.
- Have the MN send a single registration message that includes all the NAIs and their associated parameters. This could end up being a very large message sent over the air. It would be prone to transmission errors, hence retransmissions of the long message.
- Have the MN send a single registration message for only one of the NAIs e.g. the one associated with the first active data session. If the LSF has a policy to authenticate users, the LSF will request authentication for the single NAI. This may be a little risky since the authentication mechanism may be weak authentication, e.g., login ID and password, which is more prone to fraud (this is subject to the architecture supporting legacy authentication mechanisms).

Have the MN send a single registration message that does not include any NAIs. The LSF could have a policy that initiates a unique challenge for each NAI associated with the MN (NAIs should be associated with the MN's L2 Address).

The flow in Fig. 8 depicts a MN moving to a new routing area in a new LSF:

a) The MN detects it will move to a new system (new LSF). The MN informs the current system (old xAN/LSF) about to move by sending a registration message to the 'old' system (LSF) with a registration type of 'Prepare for System Change'. The 'old' system will have its router (xAN) start queuing datagrams for the MN. The user may be authenticated before buffering begins. The parameters in brackets are optional.

b) The authentication procedure is performed. If the MN and the LSF have established keys to be used for over the air encryption, it may not be necessary to authenticate the user.

c) The SMM informs the mobility agent on the old router to start buffering datagrams destined to the user's MN.

d) The router mobility agent acknowledges the message.

e) The SMM acknowledges the registration request.

f) The MN has determined it has crossed over a LSF boundary (via a new system ID). The MN sends a registration message to the IP address (which is the IP address of the SMM) that is contained in the BCCH. The MN will send a registration request message for each active packet data session it has. In this scenario, there is only one active packet data session. The message includes the old LSF's system ID.

g) The SMM detects that the registration type is 'System Change' and that the message includes the *Old LSF ID.* The SMM needs to request MN information from the old LSF and have the old LSF start buffering datagrams destined to the MN. This is achieved by sending the old LSF a context request message via the local AAA server. The SMM will put the old LSF's NAI in the message so the local AAA server can route the message (to simplify this, the SMM may pass the IP address of the old LSF).

If there is more than one active packet data session for the MN, the MN will send a registration request message for each active packet data session it has. This will incur multiple context requests being issued by the new LSF. (We can optimized this by sending a single context request that includes the MN's L2 Addr to the old LSF.) The context response will include MN information for all active packet data sessions. Hence, the new LSF will not have to send a context request message for each registration message.

The local AAA server uses the domain portion of the old LSF's NAI to determine the LSF's system. A lookup is performed to determine the IP address of LSF's AAA server and the type of security association (SA) established between the LSF and LSF. The local AAA server will then send the message to the LSF's AAA server. Before the packet is sent, an IPSec authentication (AH) is performed on the message.

h) The Old LSF's AAA server receives the message. The AAA server will first validate the IPSec AH. It then performs a lookup to see what server it should forward the message to. Since this is a context request, it forwards the message to the SMM.

i) The SMM informs the mobility agent on the old router to start buffering datagrams destined to the user's MN. NOTE: The buffer data request can have multiple MN IP addresses. Also, if the SMM had previously initiated a buffer request (during the System Change Procedure), the SMM does not have to reissue the request here.

j) The router mobility agent updates the local router to start queuing datagrams destined to the MN and then sends an acknowledge message back to the SMM.

k) The SMM creates a context response message with the MN's IP address(es) and sends it back to the new LSF SMM. All the normal AAA server functions are also executed. Additionally, it is not necessary to send the user's profile since this will be retrieved during the registration procedure.

l) The authentication procedure is performed.

m) The registration procedure is performed. The functions of the registration procedure performed here will be slightly different from the functions performed at the initial registration. As an example, there will be no processing performed due to the profile type.

n) The registration reply procedure is performed.

o) The new LSF's SMM creates a Binding Update request message that includes the user's NAI and the COA of the router that the MN's datagrams need to be tunnel to and sends it to the old LSF's SMM. (Note: all the normal AAA server functions get executed.) This request will allow the old LSF to start forwarding the MN's datagrams.

p) The old LSF's SMM sends a Forward Packets message to the mobility agent on the LSF/xAN router to request that the router start forwarding datagrams to the new router's COA.

q) The mobility agent acknowledges the forward packets request.

r) The SMM creates a Binding Update response message with the user's NAI and sends it to the new LSF's SMM. (Note: all the normal AAA server functions get executed.)

s) After the user's home NSF performed the registration, it must send the old LSF a registration cancellation message. (Note: all the normal AAA server functions get executed.) The reason for sending the registration cancellation is that there is a window where the home NSF may have sent a CN a binding update that had the old LSF's COA. The home NSF must now update the CN with the new COA and then perform the registration cancellation procedure. This will insure that the old LSF will not stop forwarding datagrams to the MN prematurely. NOTE: The registration procedure is being performed in parallel to the Binding Update procedure (which was initiated by the new LSF in step 'n'). Also, it is not necessary for the NSF to have a retry counter associated with the registration cancellation request.

t) The old LSF's SMM initiates the cleanup. The cleanup will only be performed after both the Binding Update has completed and the registration cancellation is completed.

u) The router's mobility agent acks the message.

v) The old LSF acks the registration cancellation request. (Note: all the normal AAA server functions get executed.

The flow in Fig. 9 represents the MN moving to a new routing area (RA), where the user is roaming between xANs within the same LSF. The registration request message sent through the old xAN indicates movement to another system (xAN) and triggers the LSF to start queuing MN datagrams at the old xAN.

a) The System Change procedure is performed.

b) MN has determined it has crossed over a xAN boundary (via a new system ID). The MN sends a registration message to the IP address (which is the IP address of the SMM) that is contained in the BCCH or Agent Advertisement. The MN will send a registration request message for each active packet data session it has. In this scenario, there is only one active packet data session. The message includes the old LSF's system ID.

c) The Authentication procedure is performed.

d) The Address Update procedure is performed.

e) The Registration Reply procedure is performed.

f) The LSF's SMM sends a Forward Packets message to the mobility agent on the old xAN router to request that the router start forwarding datagrams to the new router's COA. These datagrams will be tunneled to the new router's COA.

g) The mobility agent informs the xAN/router to start forwarding packets and acknowledges the Forward Data request.

h) The Registration Cancellation procedure is performed.

The flow in Fig. 10 represents a user roaming between RAs within the same xAN/LSF. However, at the xAN/LSF boundary there are multiple routers and thus, multiple routing areas (each having their own COA). When the user roams in a new RA, the associated COA must be updated at the user's home network.

There is an alternative to assigning a new COA for the user/MN. Instead of allocating a new COA and updating the COA at the user's home network, the original router could be an anchor point. In such a scenario, the original router (s) would be updated with information on how to route MN datagrams to the new router(s). This discussion, however, will be limited to updating COAs.

a) The System Change procedure is performed.

b) The MN has determined it has crossed over a routing area boundary. The MN will send a registration message for each active packet data session it has. In this scenario, there is only one active packet data session.

c) The authentication procedure is performed.

d) The SMM informs the mobility agent on the old router to start buffering datagrams destined to the user's MN.

The SMM will not issue the buffer data request if it was performed during the system change procedure.
e) The router mobility agent acknowledges the message.
f) The Address Update Procedure is performed.
g) The registration reply procedure is performed.
h) The SMM informs the mobility agent on the old router to start forwarding datagrams destined to the user's MN. These datagrams will be tunneled to the new router's COA.
i) The router mobility agent acknowledges the message.
j) The SMM informs the mobility agent on the old router to have the xAN clean up its resources.
k) The router mobility agent acknowledges the message.

The flow in Fig. 11 represents a user roaming to a new routing area where the MN's COA does not change. It should be noted that the MN does not know that the COA will not change. However, during the system change procedure, the SMM will know and will not have to buffer datagrams destined to the MN.

a) The System Change procedure is performed.
b) The MN has determined it has moved to a new routing area. The MN will send a registration message for each active packet data session it has. In this scenario, there is only one active packet data session.
c) The authentication procedure is performed.
d) If the user was authenticated, the SMM will update its local directory with the new RA and send a registration reply to the MN. Since a new COA was not allocated for the user, there are no other functions that the SMM needs to perform.

The flow in Fig. 12 represents a user roaming back into their home network, where the network is a combined LSF/NSF. The home subnet is accessed over the RAN, not over an Ethernet connection. The combined LSF/NSF may be on the same subnet.

a) The System Update procedure is performed.
b) MN has determined it has crossed over a LSF boundary (via a new system ID). The MN sends a registration message to the IP address (which is the IP address of the SMM) that is contained in the BCCH. The MN will send a registration request message for each active packet data session it has. In this scenario, there is only one active packet data session. The message includes the old LSF's system ID.
c) The context request procedure is performed.
d) The SMM creates an AAA Authentication Request and forwards it to the LSF's local AAA server. NOTE: If the SMM and the Authentication center are on the same subnet (or even on the same server) it is not necessary to have the Authentication Request go through the AAA server.
e) The local AAA server uses the domain portion of the user's NAI to determine the home system of the user. A lookup is performed to determine the IP address of the user's home AAA server and the type of security association (SA) established between the LSF and NSF. The AAA server realizes it is its own network, so it forwards the message directly to the Authentication Server.
f) The authentication server authenticates the user. The authentication server then sends an authentication response to its home AAA server.
g) The AAA server realizes it is its own network, so it forwards the message directly to the SMM.
h) The SMM creates a registration request message and forwards it to the LSF's local AAA server. NOTE: If the SMM and the HMM are on the same subnet (or even on the same server) it is not necessary to have the Authentication Request go through a AAA server
i) The local AAA server uses the domain portion of the user's NAI to determine the home system of the user. A lookup is performed to determine the IP address of the user's home AAA server and the type of security association (SA) established between the LSF and NSF. The AAA server realizes it is its own network, so it forwards the message directly to the Authentication Server.
j) The HMM will perform the following functions:

- Update the local directory with the LSF and mobility info.
- Send a route update message to the local router so it can update the MN's IP address.
- The HMM then creates a registration response message that includes the user's NAI and sends the registration response to its AAA server.

k) The AAA server realizes it is its own network, so it forwards the message directly to the SMM.
l) The Registration Reply procedure is performed.

m) The Binding Update procedure is performed.
n) The Registration Cancellation procedure is performed.

The flow in Fig. 13 represents a user roaming between LSFs where the MN does not send a registration request message to the old LSF that indicates the MN is about to move. This is the main difference between this flow and the flow in Fig. 8. During the MN's transition to the new LSF, there is a window where the old LSF may lose datagrams destined to the MN while the MN was accessing the new LSF. This flow helps to minimize this window by having the new LSF request the old LSF to start queuing datagrams for the MN. It is questionable on how large of a window there is for loss of data since the old LSF may be in the process of paging the MN, and hence already queuing the datagrams.

a) The MN has determined it has crossed over a LSF boundary (via a new system ID). The MN will send a registration message for each active packet data session it has. In this scenario, there is only one active packet data session. registration message includes the old LSF's system ID.
b) The Context Request procedure is performed.
c) The Authentication procedure is performed.
d) The Registration procedure is performed.
e) The Registration Reply procedure is performed.
f) The Binding Update procedure is performed.
g) The Registration Cancellation procedure is performed.

The flow in Fig. 14 represents a user terminating a connection to their service provider:

a) The user wants to disconnect (log off) from their service provider. Via some interface or configured button, the user selects the provider they want to disconnect from. The MN sends the de-registration message with the RegType field set to de-registration.
b) The authentication procedure is performed.
c) The SMM sends a registration request to the local AAA server.
d) The local AAA server uses the domain portion of the user's NAI to determine the home system of the user. A lookup is performed to determine the IP address of the user's home AAA server and the type of security association (SA) established between the LSF and NSF. The local AAA server will then send the message to the user's home AAA server. Before the packet is sent, an IPSec authentication (AH) is performed on the message.
e) The user's home AAA server receives the message. The AAA server will first validate the IPSec AH. It then performs a lookup to see what server it should forward the message to. It forwards the message to the HMM.
f) The HMM will perform the following functions:

- Send a route update message to the local router so it can remove the MN's IP address and COA from the routing table.
- Update its local directory.
- Update the user's entry in DNS.
- If the MN's IP address was allocate via DHCP, the HMM will give it back.
- The HMM then creates a deactivate response message that includes the user's NAI and sends it to its home AAA server.

g) The AAA server will create an IPSec AH and send the message to the local AAA server serving the user.
h) The local AAA server validates the IPSec AH and passes the message on to the SMM.
i) The SMM will cleanup and send the registration reply to the mobility agent at the xAN/LSF router.
j) The mobility agent will remove the MN's IP address from the router's route table and forward the registration reply to the MN.

The discussion now turns to the scenario where users roam to new routing areas where there are applications running (handoffs).

The flow in Fig. 15 represents a handoff between two LSFs. In this flow, the old LSF recieves a handoff indication from the xAN. The reason for this is that there are windows where the MN's registration request, with RegType set to 'Prepare for System Change', may not get to the old LSF's SMM. To insure that the MN's datagrams are queued, the xAN must send the handoff required message.

During handoff, it is a goal to not lose any data. To achieve this goal, datagrams destined to the MN are buffered as early as possible. The scenario for when XoIP datagrams (where X may be voice, data, multi-media, etc.)

arrive at the xAN has three alternatives: have the xAN buffer the XoIP datagrams; have the xAN discard (drop) the XoIP datagrams; and forward the XoIP datagrams to the new xAN/LSF. The current handoff message flows buffer the XoIP datagrams. It is important to note that the handoff procedure, which triggers the allocation of xAN resources in the new LSF, does not have to be performed by the LSF. We can make this procedure be controlled by the xANs.

a) The System Update procedure is performed.
b) The xAN (actually the mobility agent on the xAN router) sends the SMM a handoff required message which indicates the target LSF for the handoff.
c) The SMM forwards the handoff required message to the new LSF SMM. (Note: all the normal AAA server functions get executed.) The *Call Info* field includes all the current active data session for this MN (there is only one for this scenario). The *LSF domain* is sent so the SMM in the new LSF knows were the request came from. The *LSF domain* can be used by the new LSF's SMM for routing. The LSF does not have to be involved with the actual handoff. The Handoff Procedure can be performed by the xANs themselves. If the xANs do perform the procedure, they are responsible for queuing the MN's datagrams.
d) The handoff required message indicates the target for the handoff. The SMM sends an activate packet service request to the xAN so it can allocate the appropriate resources. An activate packet service request is sent for every active session that is listed in the *Call Info* field.
e) The xAN allocates the appropriate resources and sends an activate packet service response back to the SMM.
f) The new SMM sends a handoff required acknowledge to the old SMM and all the normal AAA server functions get executed.
g) The SMM sends a Handoff required acknowledge message to the mobility agent on the xAN router. This inform the xAN that the handoff is set up. If we have not started queuing datagrams for the MN, it should start queuing now, i.e., the handoff required acknowledge doubles as a buffer data request.
h) The MN returns to the appropriate frequency. The MN realizes it has crossed over a LSF boundary (via a new system ID). It also realizes that there are active application sessions, hence it will set the RegType to be 'SystemHO'. The MN will send a registration request message for each active packet data session it has. In this scenario, there is only one active packet data session. The message includes the old LSF's system ID.
i) The Context Request procedure is performed. If the LSF is responsible for performing the Handoff Procedure, this step does not have to be performed.
j) The Authentication procedure is performed. Authentication does not have to be performed at this step. We can complete the handoff then perform a unique challenge to authenticate the user.
k) The Registration procedure is performed.
l) The Registration Reply procedure is performed. The Binding Update procedure is performed.
m) The MN realizes that it is in a new system and has active application sessions, hence, it send the SMM a list of correspondent nodes it is in communications with. Note: An alternative to this would be to have the home network request the CN list from the MN after the home network was updated with the new COA.
n) The SMM forwards the message to the HMM at the MN's NSF and all the normal AAA server functions get executed.
o) The HMM acknowledges the correspondent node list and all the normal AAA server functions get executed.
p) The SMM forwards the message to the MN.
q) When the HMM has received a Correspondent Node (CN) 38 list, it will send binding updates that include the MN's new COA to the CNs.
r) The CNs will acknowledge the binding update.
s) The Registration Cancellation procedure is performed.

The flow in Fig. 16 represents a handoff between two xANs on the same LSF.

a) The System Update procedure is performed.
b) The xAN (actually the mobility agent on the xAN router) sends the SMM a handoff required message which indicates the target LSF for the handoff.
c) The Handoff procedure is performed.
d) The SMM sends a Handoff required acknowledge message to the mobility agent on the xAN router. This informs the xAN that the handoff is set up. If the datagrams have not started queuing for the MN, they should start queuing (the handoff required acknowledge doubles as a buffer data request).
e) The MN returns to the appropriate frequency. The MN realizes it has crossed over a LSF boundary (via a new system ID). It also realizes that there are active application sessions, hence it will set the RegType to be 'SystemHO'. The MN will send a registration request message for each active packet data session it has. In this scenario, there is only one active packet data session. The message includes the old LSF's system ID.

f) The Authentication procedure is performed.
g) The Registration procedure is performed.
h) The Registration Reply procedure is performed.
i) The old LSF's SMM sends a Forward Packets message to the mobility agent on the LSF/xAN router to request that the router start forwarding datagrams to the new router's COA. These datagrams will be tunneled to the new router's COA.
j) The mobility agent informs the xAN/router to start forwarding packets.
k) The MN realizes that it is in a new system and has active application sessions, hence, it sends its home network a list of correspondent nodes it is in communications with. Note: An alternative to this would be to have the home network request the CN list from the MN after the home network was updated with the new COA.
l) The HMM acknowledges the correspondent node list.
m) When the HMM has received both the CN list and the new COA, it will send binding updates that include the new COA to the CNs.
n) The CNs will ack the binding update
o) The Registration Cancellation procedure is performed.

The flow in Fig. 17 depicts a handoff between two xANs on the same LSF. The main difference between this flow and the flow in Fig.16 is that there is a hierarchy of routers in the LSF/xAN.

a) The System Update procedure is performed.
b) The xAN (actually the mobility agent on the xAN router) sends the SMM a handoff required message which indicates the target LSF for the handoff.
c) The Handoff procedure is performed.
d) The SMM sends a Handoff required acknowledge message to the mobility agent on the xAN router. This informs the xAN that the handoff is set up. If we have not started queuing datagrams for the MN, it should start queuing now, i.e., the handoff requided acknowledge doubles as a buffer data request.
e) The MN retunes to the appropriate frequency. The MN realizes it has crossed over a LSF boundary (via a new system ID). It also realizes that there are active application sessions, hence it will set the RegType to be 'SystemHO'. The MN will send a registration request message for each active packet data session it has. In this scenario, there is only one active packet data session. The message includes the old LSF's system ID.
f) The Authentication procedure is performed.
g) The Registration procedure is performed.
h) The SMM will update its local directory with the appropriate info. The SMM will send a registration reply to a mobility agent on the xAN/LSF router.
i) The mobility agent at the xAN/LSF router must update the router's routing table to include the MN's IP address. When this occurs, some routing protocol, e.g., RIP, will update the local network with routing information so datagrams can be delivered to the xAN router, i.e., the LSF router will receive a route update and will know how to forward detunneled datagrams. The xAN must be told of the 'binding' between the MN's IP Address and the MN's L2 Address. The mobility agent then sends the registration reply to the MN.
j) The old LSF's SMM sends a Forward Packets message to the mobility agent on the LSF/xAN router to request that the router start forwarding datagrams to the new router's COA. These datagrams will be tunneled to the new router's COA.
k) The mobility agent informs the xAN/router to start forwarding packets.
l) The Update CN procedure is performed.
m) The Registration Cancellation procedure is performed.

Fig. 18 depicts a computer 40 (which contains a computer program) that comprises a processor 42 and memory 44. The computer 40 may be a personal computer or laptop, a LSF 14, a NSF 16, a service broker 18, a xAN 20, a MN 22, a SMM 26, a HMM 28, a AAA server 30, a security gateway 32, a router 34, an authentication server 36, a correspondent node 38 and/or any device that can send and receive IP mobility extension messages. The processor 42 may be a central processing unit, digital signal processor, microprocessor, microcontroller, microcomputer, and/or any device that manipulates digital information based on programming instructions. The memory 44 may be read-only memory, random access memory, flash memory and/or any device that stores digital information. The memory 44 is coupled to the processor 42 and stores programming instructions that, when read by the processor, cause the processor to perform certain processing operations.

Fig. 19 describes a method for utilizing IP mobility messages and AAA messages in a communication system that may be implemented by the computer 40 of Fig. 18. The communication system comprises a data network coupled to a visited network, a home network, and a service broker, wherein the visited network and the home network are each coupled to an access node. The method begins at decision 50 where a serving mobility manager (SMM) receives via the access node, a user request for information, where the SMM is located in the visited network. At step 52 a local AAA server queries the service broker to determine the user's home network, where the local AAA server is coupled to the SMM and located in the visited network, and where the service broker is coupled to the visited network and the home network. The method proceeds to step 54 where a service broker AAA server contacts a home AAA server, where the home AAA server is located in the home network, and where the service broker AAA server is located in the service broker. At step 56, the service broker AAA server establishes a trust relationship between the visited network and the home network by utilizing an extension of the IP mobility messages, where the IP mobility extension messages are combined with the AAA messages to provide mobility functionality to the AAA messages. At step 58, a home mobility manager (HMM) transmits to the user, the information via the data network, the SMM, and the access node using the trust relationship, where the HMM is coupled to the home AAA server and is located in the home network.

The present invention thus enjoys several advantages. For example, the IP mobility extension messages are combined with the AAA messages to provide mobility functionality to the AAA messages. These IP mobility extension messages now provide an IP centric network with a mobility protocol that can be used to communicate between the various entities in the IP network. Further, these IP networks may be utilized via a plurality of access protocols.

It is understood that variations may be made in the foregoing without departing from the scope of the present invention. For example, any number and combination of entities such as a LSF 14, a NSF 16, a service broker 18, a xAN 20, a MN 22, a SMM 26, a HMM 28, a AAA server 30, a security gateway 32, a router 34, an authentication server 36, a correspondent node 38, and a computer 40 may be used with the present network 10. Further, the system 10 may be connected to another wireless, wireline, data, voice, and/or multi-media system. Also, the computer program (s) that facilitate the IP mobility extension messaging may be fully and/or partially contained in the entities described above.

It is further understood that other modifications, changes and substitutions are intended in the foregoing disclosure and in some instances some features of the disclosure will be employed without corresponding use of other features. Additionally, singular discussion of items located in the network 10 is also meant to apply to situations where multiple items exist. Accordingly, it is appropriate that the appended claims be construed broadly and in a manner consistent with the scope of the disclosure.

## Claims

**1.** A method for utilizing Internet Protocol (IP) mobility messages and Authentication, Authorization, and Accounting (AAA) messages in a communication system comprising a data network coupled to a visited network, a home network, and a service broker, wherein the visited network and the home network are each coupled to an access node, the method comprising:

receiving, by the visited network via the access node, a user request for information;
querying, by the visited network, the service broker to determine the user's home network, wherein the service broker is coupled to the visited network and the home network;
contacting, by the service broker, the home network;
establishing, by the service broker, a trust relationship between the visited network and the home network by utilizing an extension of the IP mobility messages, wherein extensions to the IP mobility messages are combined with the AAA messages to provide mobility functionality to the AAA messages; and
transmitting, by the home network to the user, the information via the data network, the visited network, and the access node using the trust relationship.

**2.** A method according to claim 1, in which a serving mobility manager (SMM) is located in the visited network, a local AAA server is coupled to the SMM and located in the visited network, a service broker AAA server is located in the service broker, a home AAA server is located in the home network, and a home mobility manager (HMM) is coupled to the home AAA server and is located in the home network, wherein the step of receiving the user request includes the step of the SMM receiving via the access node the user request for information, the step of querying includes the step of the local AAA server querying the service broker to determine the user's home network, the step of contacting includes the step of the service broker AAA server contacting the home AAA server, and the step of transmitting includes the step of the home mobility manager (HMM) transmitting to the user, the information via the data network, the SMM, and the access node using the trust relationship.

**3.** A method according to claim 1 or 2, further comprising the step of transmitting the user request via a plurality of access protocols.

**4.** A method according to claim 1, 2 or 3, wherein the IP mobility extension messages comprise base AAA headers, message specific attribute value pairs, and message specific parameters.

**5.** A method according to claim 1, 2, 3 or 4, further comprising the step of creating the IP mobility extension messages in the SMM.

**6.** A method according to claim 1, 2, 3 or 4, further comprising the step of creating the IP mobility extension messages in the HMM.

**7.** A method according to any preceding claim, wherein the IP mobility extension messages comprise registration messages, wherein the registration messages comprise:

a registration request message;
a registration response message;
a registration cancellation message;
a registration cancellation acknowledge message;
an address update request message;
an address update response message;
a terminate call request message; and
a terminate call response message.

**8.** A method according to any of claims 1 to 6, wherein the IP mobility extension messages comprise inter-local serving function messages, wherein the inter-local serving function messages comprise:

a context request message;
a context response message;
a binding update request message; and
a binding update response message.

**9.** A method according to any of claims 1 to 6, wherein the IP mobility extension messages comprise proxy/broker messages, wherein the proxy/broker messages comprise:

a discover request message; and
a discover response message.

**10.** A method according to any of claims 1 to 6, wherein the IP mobility extension messages comprise correspondent messages, wherein the correspondent messages comprise:

a correspondent node list message; and
a correspondent node list acknowledge message.

**11.** A method according to claim 7, wherein the registration request message comprises at least one of the following message specific parameters from the group consisting of:

a user NAI;
an IP address of a mobile node;
local serving function NAI;
a care of address of the mobile node;
a profile type;
a terminal type;
a service level request;
a signal strength;
a protocol version;
a destination NAI;
a source NAI; and
a time stamp.

**12.** A method according to claim 7, wherein the registration response message comprises at least one of the following message specific parameters from the group consisting of:

a user NAI;
an IP address;
a profile;
a care of address required;
a response code;
an authorization period;
a destination NAI;
a source NAI; and
a time stamp.

**13.** A method according to claim 7, wherein the registration cancellation message comprises at least one of the following message specific parameters from the group consisting of:

a user NAI;
a local serving function NAI;
a Level 2 address;
a mobile station IP address; and
a HMM NAI.

**14.** A method according to claim 7, wherein the registration cancellation acknowledge message comprises at least one of the following message specific parameters from the group consisting of:

a user NAI;
a destination NAI;
a source NAI; and
a time stamp.

**15.** A method according to claim 7, wherein the address update request message comprises at least one of the following message specific parameters from the group consisting of:

a user NAI;
a co-located care of address;
a MS IP Address;
a destination NAI;
a source NAI; and
a time stamp.

**16.** A method according to claim 7, wherein the address update response message comprises at least one of the following message specific parameters from the group consisting of:

a user NAI;
a MS IP Address;
a destination NAI;
a source NAI; and
a time stamp.

**17.** A method according to claim 8, wherein the context request message comprises at least one of the following message specific parameters from the group consisting of:

a user NAI;
a previous local serving function NAI;
a Level 2 address;
a context request type;
a destination NAI;
a source NAI; and
a time stamp.

**18.** A method according to claim 8, wherein the context response message comprises at least one of the following message specific parameters from the group consisting of:

a user NAI;
a current local serving function NAI;
a mobile station IP address;
a response code;
a context date;
a destination NAI;
a source NAI; and
a time stamp.

**19.** A method according to claim 8, wherein the binding update request message comprises at least one of the following message specific parameters from the group consisting of:

a user NAI;
a local serving function NAI;
a mobile station IP address;
a destination NAI;
a source NAI; and
a time stamp.

**20.** A method according to claim 8, wherein the binding update response message comprises at least one of the following message specific parameters from the group consisting of:

a user NAI;
a response code;
a destination NAI;
a source NAI; and
a time stamp.

**21.** A method according to claim 9, wherein the discover request message comprises at least one of the following message specific parameters from the group consisting of:

a user NAI;
a destination NAI;
a source NAI; and
a time stamp.

**22.** A method according to claim 9, wherein the discover response message comprises at least one of the following message specific parameters from the group consisting of:

a user NAI;
an HA address;
a destination NAI;
a source NAI; and
a time stamp.

**23.** A method according to claim 10, wherein the correspondent node list message comprises at least one of the following message specific parameters from the group consisting of:

a user NAI; and
a correspondent node IP list;
a destination NAI;
a source NAI; and
a time stamp.

**24.** A method according to claim 10, wherein the correspondent node list acknowledge message comprises at least one of the following message specific parameters from the group consisting of:

a user NAI;
a response code;
a destination NAI;
a source NAI; and
a time stamp.

**25.** A method according to any preceding claim, further comprising the step of pre-configuring a trust relationship between the visited network and user's home network, wherein the steps of querying and contacting comprises the step of querying, by the visited network, the user's home network, via the pre-configured trust relationship.

**26.** A method according to any of claims 1 to 24, wherein the steps of querying, contacting and establishing are performed dynamically to establish a relationship with the home network.

**27.** A computer program comprising computer program code means for performing the steps of any one of claims 1 to 26 when said program is run on a computer or a number of computers.

**28.** A computer program as claimed in claim 27 embodied on a computer readable medium.

**29.** A system for utilizing Internet Protocol (IP) mobility messages and Authentication, Authorization, and Accounting (AAA) messages, the system comprising a data network coupled to a visited network, a home network, and a service broker, wherein the visited network and the home network are each coupled to an access node, and wherein the system further comprises:

means for receiving, by the visited network via the access node, a user request for information;
means for querying, by the visited network, the service broker to determine the user's home network, wherein the service broker is coupled to the visited network and the home network;
means for contacting, by the service broker, the home network;
means for establishing, by the service broker, a trust relationship between the visited network and the home network by utilizing an extension of the IP mobility messages, wherein the IP mobility extension messages are combined with the AAA messages to provide mobility functionality to the AAA messages; and
means for transmitting, by the home network to the user, the information via the data network, the visited network, and the access node using the trust relationship.

**30.** A system according to claim 29, the means for receiving including a serving mobility manager (SMM) located in the visited network, the means for querying including a local AAA server coupled to the SMM and located in the visited network, the means for contacting and means for establishing including a service broker AAA server located in the service broker and a home AAA server located in the home network, and the means for transmitting including a home mobility manager (HMM) located in the home network.

**31.** A system according to claim 29 or 30 further comprises means for transmitting the user request via a plurality of access protocols.

**32.** A system according to claim 29, 30 or 31, wherein the IP mobility extension messages comprise base AAA headers, message specific attribute value pairs, and message specific parameters.

**33.** A system according to any of claims 29 to 32, further comprising means for creating the IP mobility extension messages in the visited network.

**34.** A system according to any of claims 29 to 32, further comprising means for creating the IP mobility extension messages in the home network.

**35.** A system according to any of claims 29 to 34, wherein the IP mobility extension messages comprise registration messages, wherein the registration messages comprise:

a registration request message;
a registration response message;

a registration cancellation message;
a registration cancellation message;
an address update request message;
an address update response message;
a terminate call request message; and
a terminate call response message.

**36.** A system according to any of claims 29 to 34, wherein the IP mobility extension messages comprise inter-local serving function messages, wherein the inter-local serving function messages comprise:

a context request message;
a context response message;
a binding update request message; and
a binding update response message.

**37.** A system according to any of claims 29 to 34, wherein the IP mobility extension messages comprise correspondent messages, wherein the correspondent messages comprise:

a correspondent node list message; and
a correspondent node list acknowledge message.

**38.** A system according to any of claims 29 to 37, in which a pre-configured trust relationship is established between the visited network and the user's home network, wherein the pre-configured trust relationship is used in place of the means for contacting and establishing.

**39.** A system comprising means for combining an extension of IP mobility messages with AAA messages to provide mobility functionality to the AAA messages.

**40.** A system comprising means for utilizing an extension of IP mobility messages with AAA messages to provide mobility functionality to the AAA messages in the system.

**41.** A system comprising:

means for registering a user;
means for permitting, by the system, the user to roam to new routing areas where there are no applications running; and
means for permitting, by the system, the user to roam to new routing areas where there are applications running, wherein the user's mobile node utilizes a combination of an extension of IP mobility messages with AAA messages to access the applications.

**42.** A system for roaming between routing areas within the same Access Node/Local Serving Function (xAN/LSF), the system utilizing Internet Protocol (IP) mobility messages and Authentication, Authorization, and Accounting (AAA) messages and comprising a data network coupled to a visited network, a home network, and a service broker, wherein the visited network and the home network are each coupled to an access node, and wherein the system further comprises:

means for performing, by the system, a system change;
means for sending, by a mobile node, a registration message for each active packet data session, wherein the mobile node transmits and receives datagrams between the system;
means for performing, by the system, authentication;
means for buffering the datagrams, by the xAN, destined to the user's mobile node;
means for acknowledging, by a serving mobility manager (SMM), a datagram buffering message;
means for performing, by the system, an address update procedure;
means for performing, by the system, a registration reply procedure;
means for forwarding, by the xAN, datagrams destined to the user's mobile node;
means for acknowledging, by the SMM, a datagram forwarding message;
means for requesting, by the SMM, a clean up of the xANs resources; and
means for acknowledging, by the SMM, the clean up message.

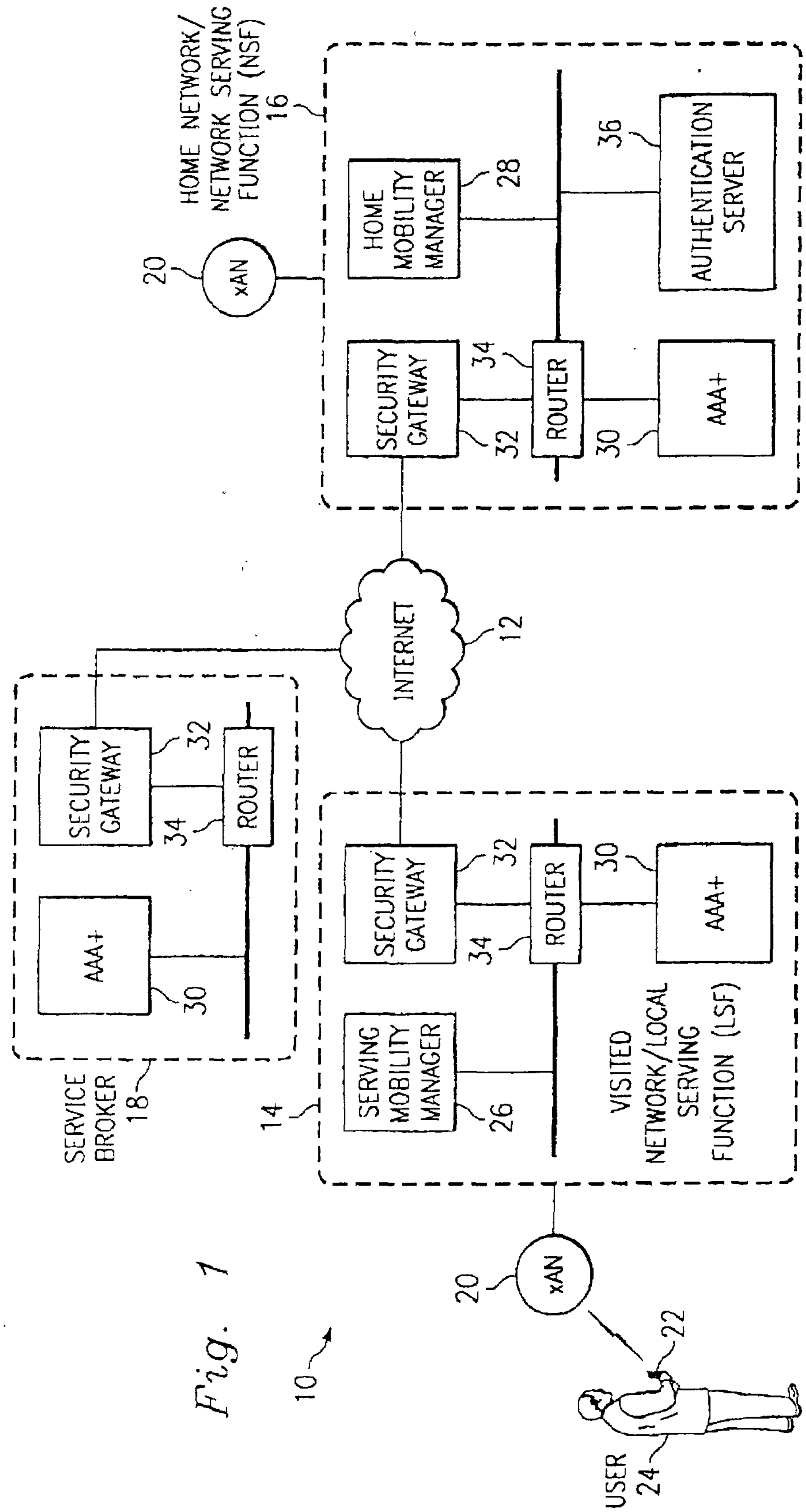
HOME NETWORK/
NETWORK SERVING
FUNCTION (NSF)
16
20
xAN
HOME
MOBILITY
MANAGER
28
36
AUTHENTICATION
SERVER
SECURITY
GATEWAY
32
34
ROUTER
30
AAA+
INTERNET
12
SECURITY
GATEWAY
32
34
ROUTER
AAA+
30
SERVICE
BROKER
18
SECURITY
GATEWAY
32
34
ROUTER
30
AAA+
SERVING
MOBILITY
MANAGER
26
14
VISITED
NETWORK/LOCAL
SERVING
FUNCTION (LSF)
20
xAN
22
10
USER
24

Fig. 1

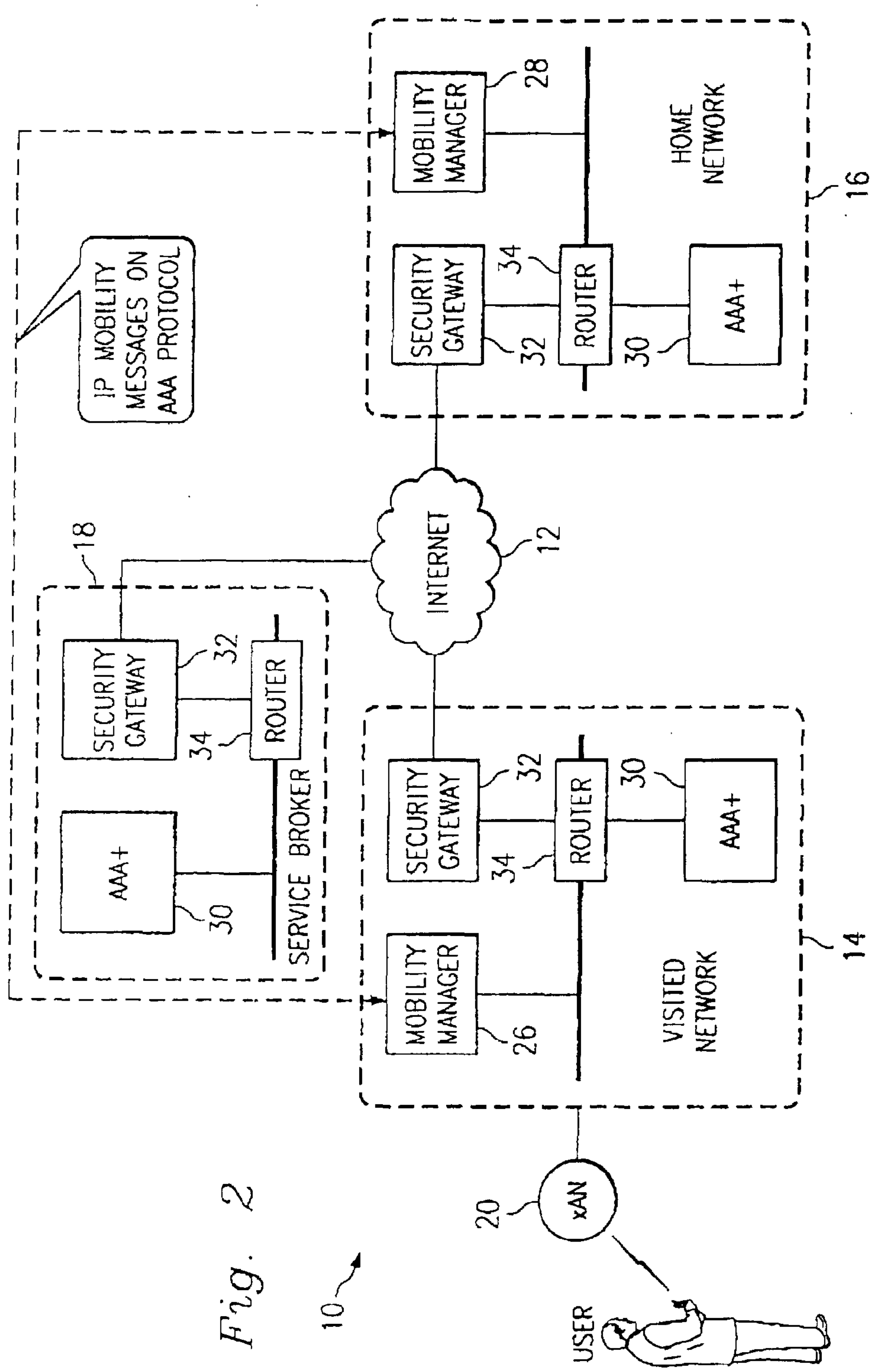
IP MOBILITY MESSAGES ON AAA PROTOCOL
MOBILITY MANAGER
28
HOME NETWORK
16
SECURITY GATEWAY
32
ROUTER
34
AAA+
30
INTERNET
12
18
SECURITY GATEWAY
32
ROUTER
34
AAA+
30
SERVICE BROKER
SECURITY GATEWAY
32
ROUTER
34
AAA+
30
MOBILITY MANAGER
26
VISITED NETWORK
14
xAN
20
USER
10

Fig. 2

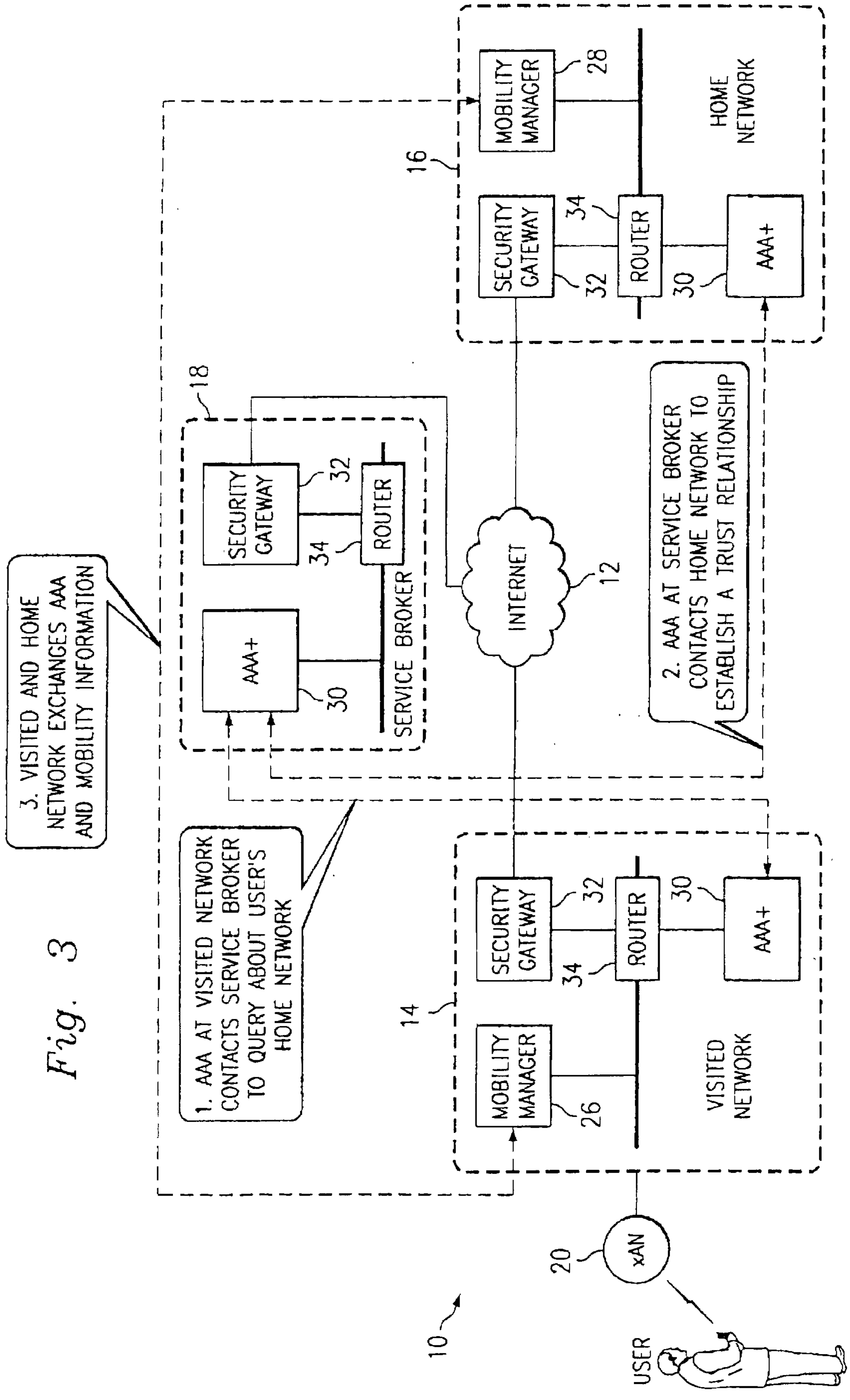
3. VISITED AND HOME NETWORK EXCHANGES AAA AND MOBILITY INFORMATION
1. AAA AT VISITED NETWORK CONTACTS SERVICE BROKER TO QUERY ABOUT USER'S HOME NETWORK
2. AAA AT SERVICE BROKER CONTACTS HOME NETWORK TO ESTABLISH A TRUST RELATIONSHIP
SECURITY GATEWAY
ROUTER
AAA+
SERVICE BROKER
INTERNET
MOBILITY MANAGER
HOME NETWORK
VISITED NETWORK
xAN
USER
10
12
14
16
18
20
26
28
30
32
34

Fig. 3

Fig. 4

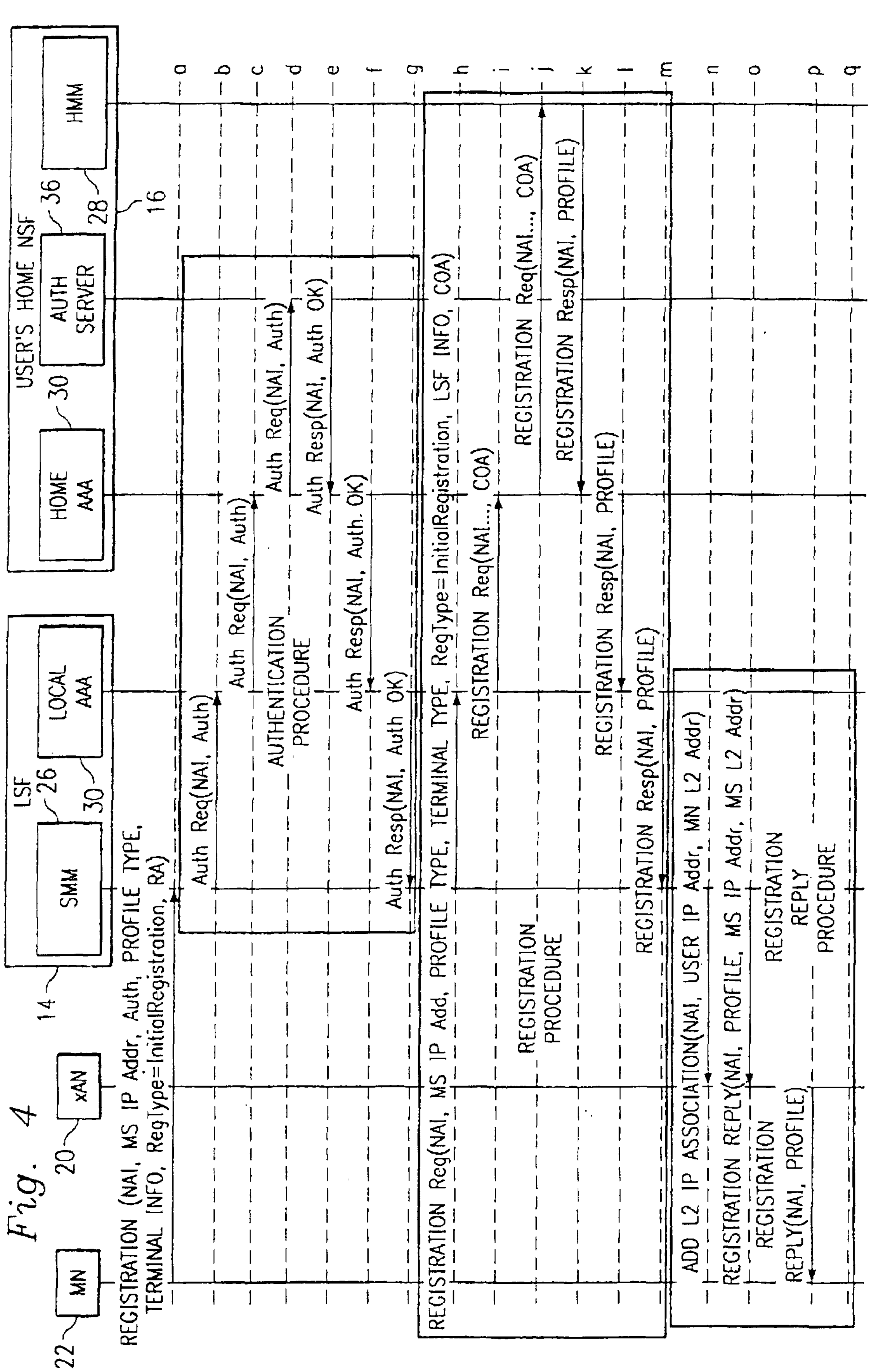
MN
xAN
SMM
LOCAL AAA
LSF
HOME AAA
AUTH SERVER
HMM
USER'S HOME NSF
22
20
14
26
30
30
36
28
16
REGISTRATION (NAI, MS IP Addr, Auth, PROFILE TYPE, TERMINAL INFO, RegType=InitialRegistration, RA)
Auth Req(NAI, Auth)
Auth Req(NAI, Auth)
Auth Req(NAI, Auth)
AUTHENTICATION PROCEDURE
Auth Resp(NAI, Auth OK)
Auth Resp(NAI, Auth. OK)
Auth Resp(NAI, Auth OK)
REGISTRATION Req(NAI, MS IP Add, PROFILE TYPE, TERMINAL TYPE, RegType=InitialRegistration, LSF INFO, COA)
REGISTRATION Req(NAI..., COA)
REGISTRATION Req(NAI..., COA)
REGISTRATION PROCEDURE
REGISTRATION Resp(NAI, PROFILE)
REGISTRATION Resp(NAI, PROFILE)
REGISTRATION Resp(NAI, PROFILE)
ADD L2 IP ASSOCIATION(NAI, USER IP Addr, MN L2 Addr)
REGISTRATION REPLY(NAI, PROFILE, MS IP Addr, MS L2 Addr)
REGISTRATION REPLY(NAI, PROFILE)
REGISTRATION REPLY PROCEDURE
a
b
c
d
e
f
g
h
i
j
k
l
m
n
o
p
q

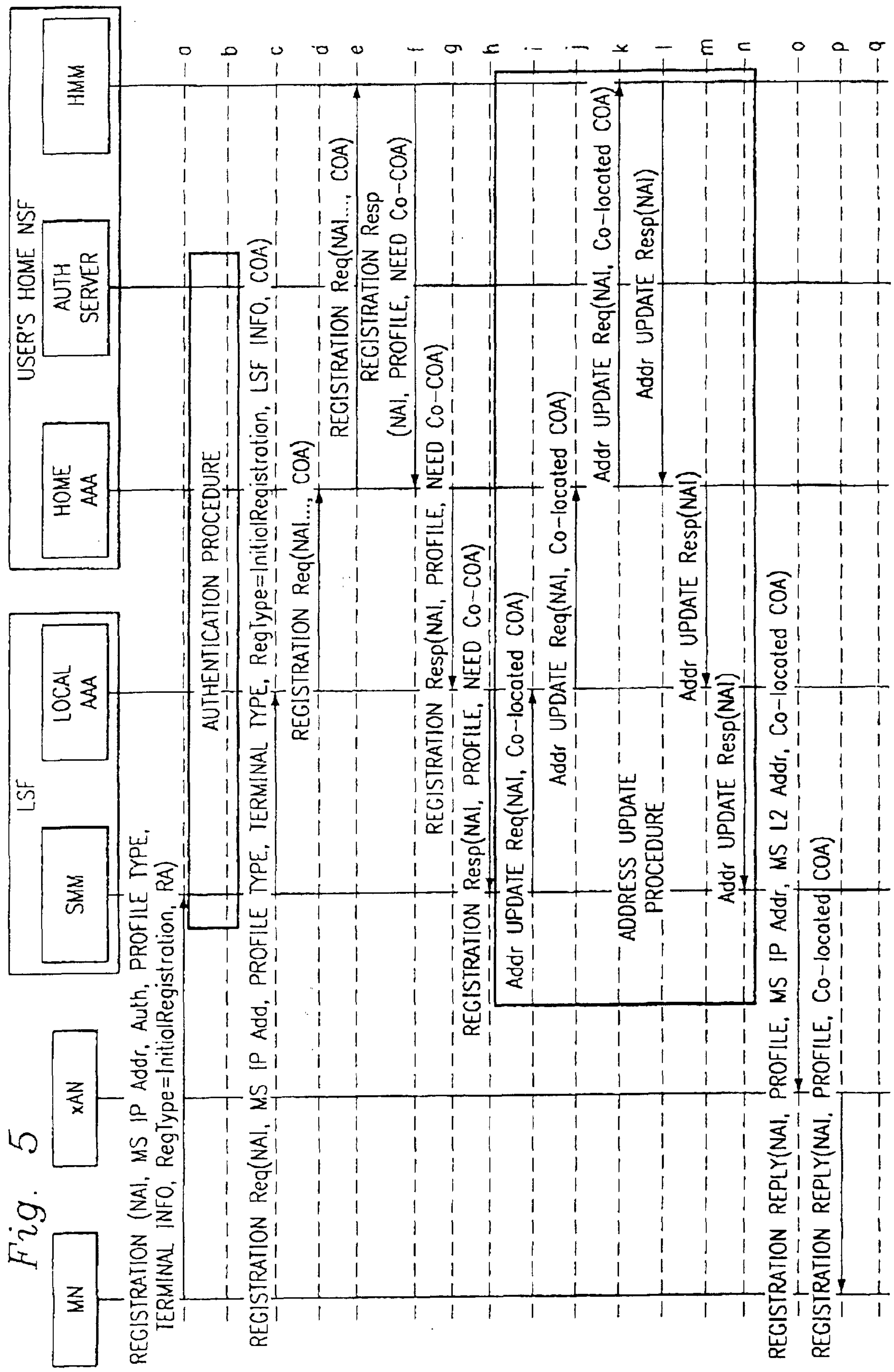
Fig. 5
MN
xAN
LSF
SMM
LOCAL AAA
USER'S HOME NSF
HOME AAA
AUTH SERVER
HMM
REGISTRATION (NAI, MS IP Addr, Auth, PROFILE TYPE, TERMINAL INFO, RegType=InitialRegistration, RA)
AUTHENTICATION PROCEDURE
REGISTRATION Req(NAI, MS IP Add, PROFILE TYPE, TERMINAL TYPE, RegType=InitialRegistration, LSF INFO, COA)
REGISTRATION Req(NAI..., COA)
REGISTRATION Req(NAI..., COA)
REGISTRATION Resp (NAI, PROFILE, NEED Co-COA)
REGISTRATION Resp(NAI, PROFILE, NEED Co-COA)
REGISTRATION Resp(NAI, PROFILE, NEED Co-COA)
Addr UPDATE Req(NAI, Co-located COA)
Addr UPDATE Req(NAI, Co-located COA)
Addr UPDATE Req(NAI, Co-located COA)
ADDRESS UPDATE PROCEDURE
Addr UPDATE Resp(NAI)
Addr UPDATE Resp(NAI)
Addr UPDATE Resp(NAI)
REGISTRATION REPLY(NAI, PROFILE, MS IP Addr, MS L2 Addr, Co-located COA)
REGISTRATION REPLY(NAI, PROFILE, Co-located COA)
a
b
c
d
e
f
g
h
i
j
k
l
m
n
o
p
q

*Fig. 6*

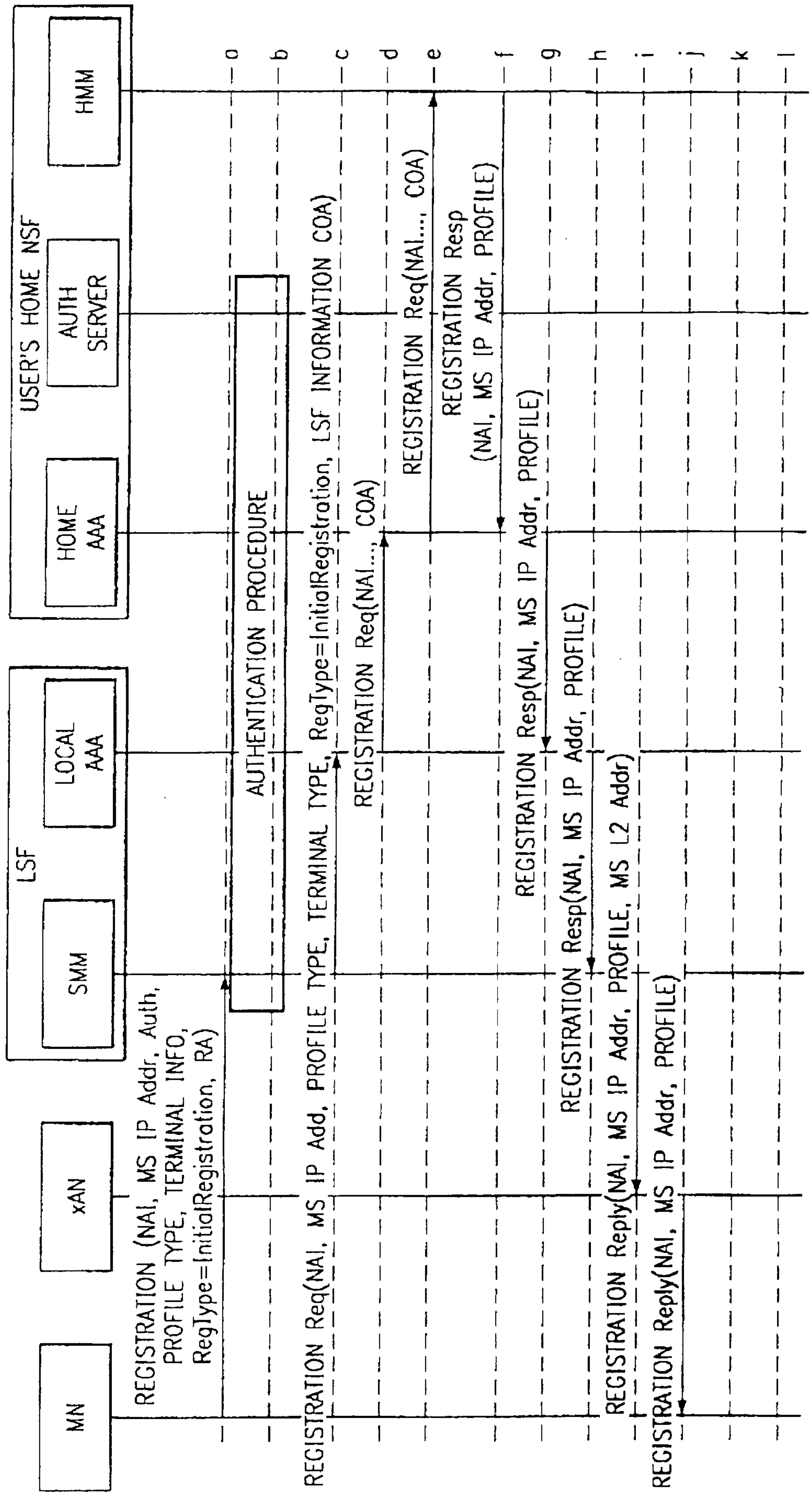
MN
xAN
LSF
SMM
LOCAL AAA
USER'S HOME NSF
HOME AAA
AUTH SERVER
HMM
a
b
c
d
e
f
g
h
i
j
k
l
REGISTRATION (NAI, MS IP Addr, Auth, PROFILE TYPE, TERMINAL INFO, RegType=InitialRegistration, RA)
AUTHENTICATION PROCEDURE
REGISTRATION Req(NAI, MS IP Add, PROFILE TYPE, TERMINAL TYPE, RegType=InitialRegistration, LSF INFORMATION COA)
REGISTRATION Req(NAI..., COA)
REGISTRATION Req(NAI..., COA)
REGISTRATION Resp (NAI, MS IP Addr, PROFILE)
REGISTRATION Resp(NAI, MS IP Addr, PROFILE)
REGISTRATION Resp(NAI, MS IP Addr, PROFILE)
REGISTRATION Reply(NAI, MS IP Addr, PROFILE, MS L2 Addr)
REGISTRATION Reply(NAI, MS IP Addr, PROFILE)

*Fig. 7*

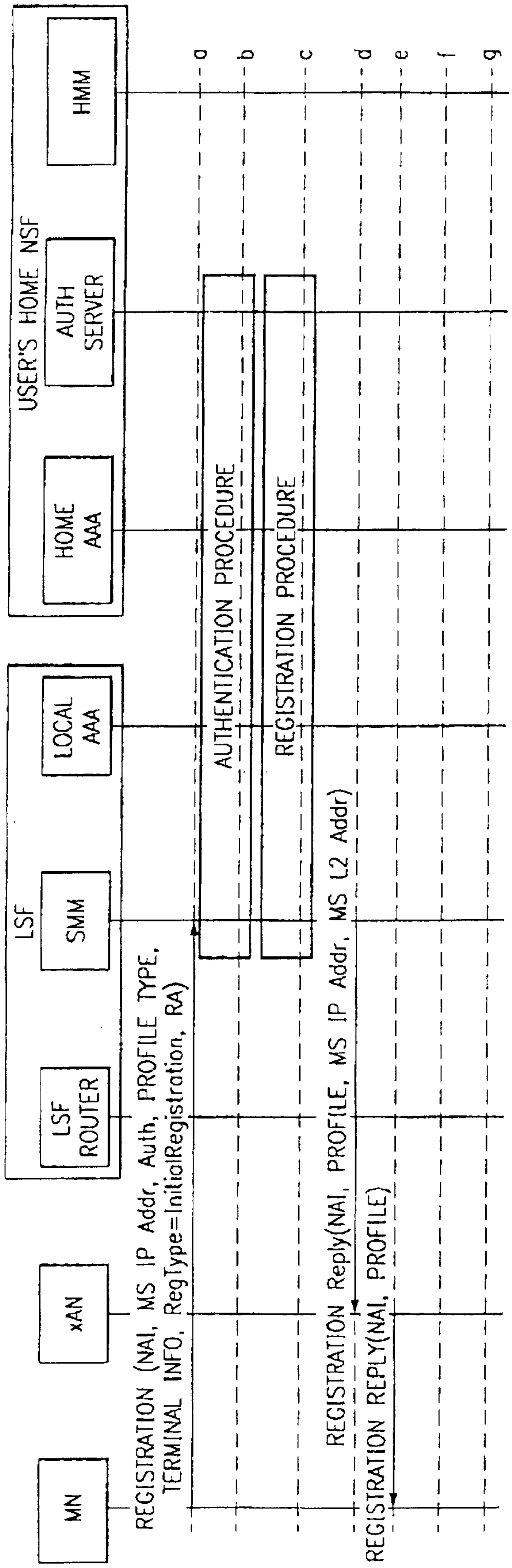
MN
xAN
LSF
LSF ROUTER
SMM
LOCAL AAA
USER'S HOME NSF
HOME AAA
AUTH SERVER
HMM
REGISTRATION (NAI, MS IP Addr, Auth, PROFILE TYPE, TERMINAL INFO, RegType=InitialRegistration, RA)
AUTHENTICATION PROCEDURE
REGISTRATION PROCEDURE
REGISTRATION Reply(NAI, PROFILE, MS IP Addr, MS L2 Addr)
REGISTRATION REPLY(NAI, PROFILE)
a
b
c
d
e
f
g

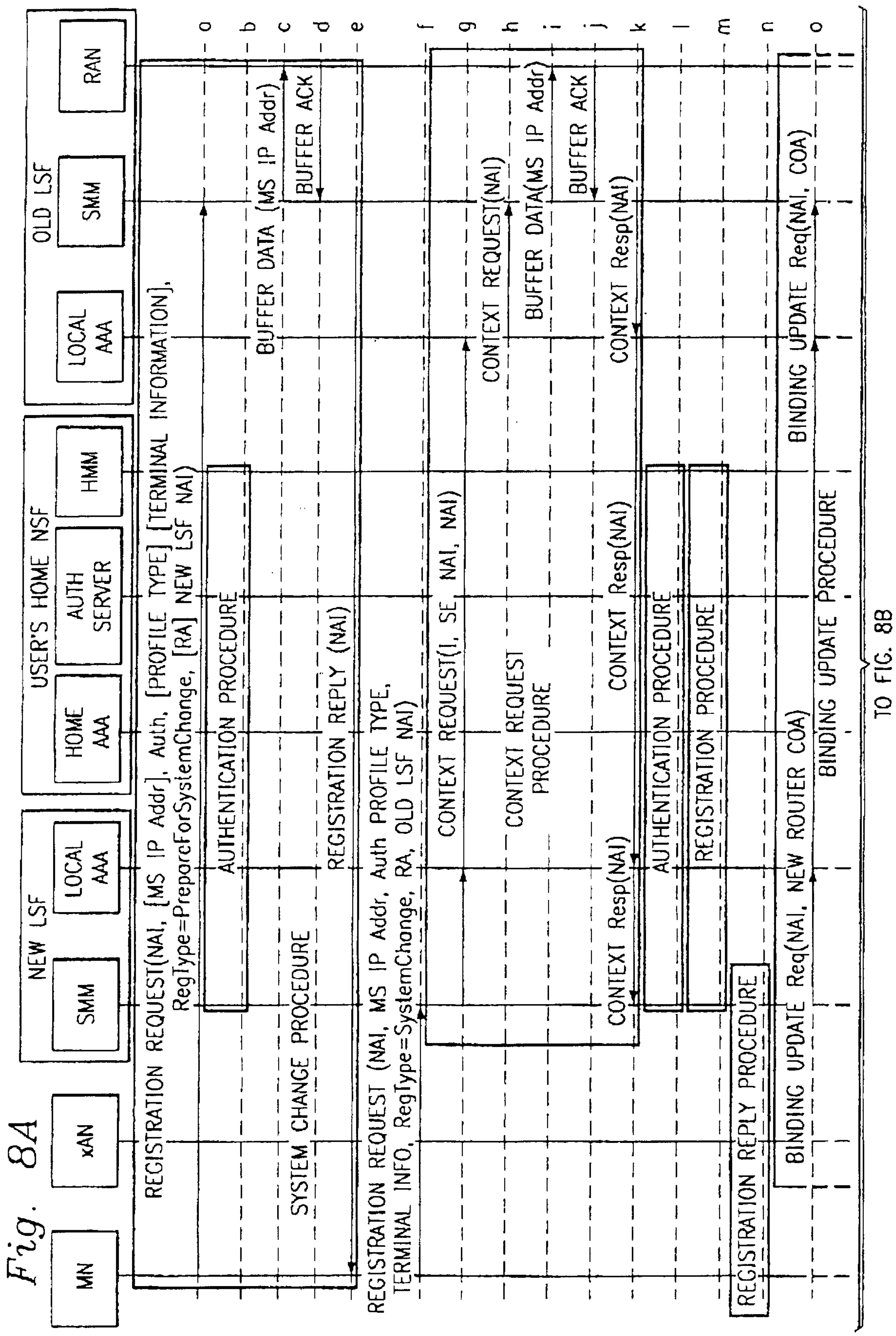
MN
xAN
NEW LSF
SMM
LOCAL AAA
USER'S HOME NSF
HOME AAA
AUTH SERVER
HMM
OLD LSF
LOCAL AAA
SMM
RAN
REGISTRATION REQUEST(NAI, [MS IP Addr], Auth, [PROFILE TYPE] [TERMINAL INFORMATION], RegType=PrepareForSystemChange, [RA] NEW LSF NAI)
AUTHENTICATION PROCEDURE
BUFFER DATA (MS IP Addr)
BUFFER ACK
SYSTEM CHANGE PROCEDURE
REGISTRATION REPLY (NAI)
REGISTRATION REQUEST (NAI, MS IP Addr, Auth PROFILE TYPE, TERMINAL INFO, RegType=SystemChange, RA, OLD LSF NAI)
CONTEXT REQUEST(I, SE, NAI, NAI)
CONTEXT REQUEST(NAI)
CONTEXT REQUEST PROCEDURE
BUFFER DATA(MS IP Addr)
BUFFER ACK
CONTEXT Resp(NAI)
CONTEXT Resp(NAI)
CONTEXT Resp(NAI)
AUTHENTICATION PROCEDURE
REGISTRATION PROCEDURE
REGISTRATION REPLY PROCEDURE
BINDING UPDATE Req(NAI, NEW ROUTER COA)
BINDING UPDATE PROCEDURE
BINDING UPDATE Req(NAI, COA)
a
b
c
d
e
f
g
h
i
j
k
l
m
n
o
TO FIG. 8B

Fig. 8A

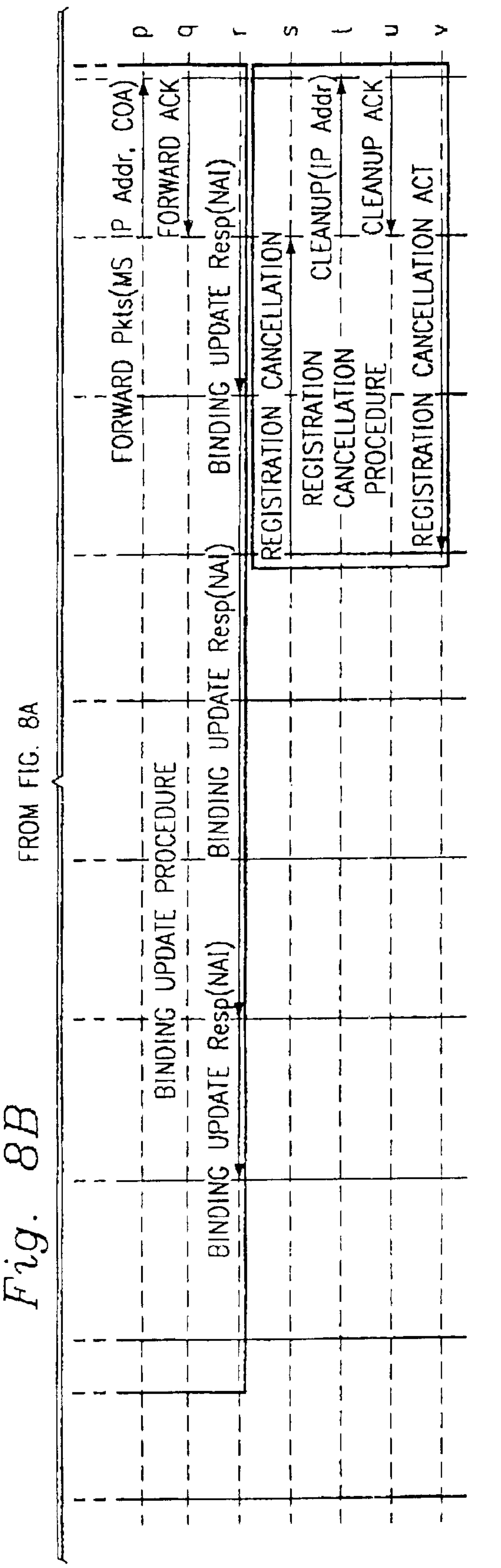
FROM FIG. 8A
FORWARD Pkts(MS IP Addr, COA)
FORWARD ACK
BINDING UPDATE Resp(NAI)
BINDING UPDATE PROCEDURE
BINDING UPDATE Resp(NAI)
BINDING UPDATE Resp(NAI)
BINDING UPDATE Resp(NAI)
REGISTRATION CANCELLATION
CLEANUP(IP Addr)
CLEANUP ACK
REGISTRATION CANCELLATION PROCEDURE
REGISTRATION CANCELLATION ACT
p
q
r
s
t
u
v

Fig. 8B

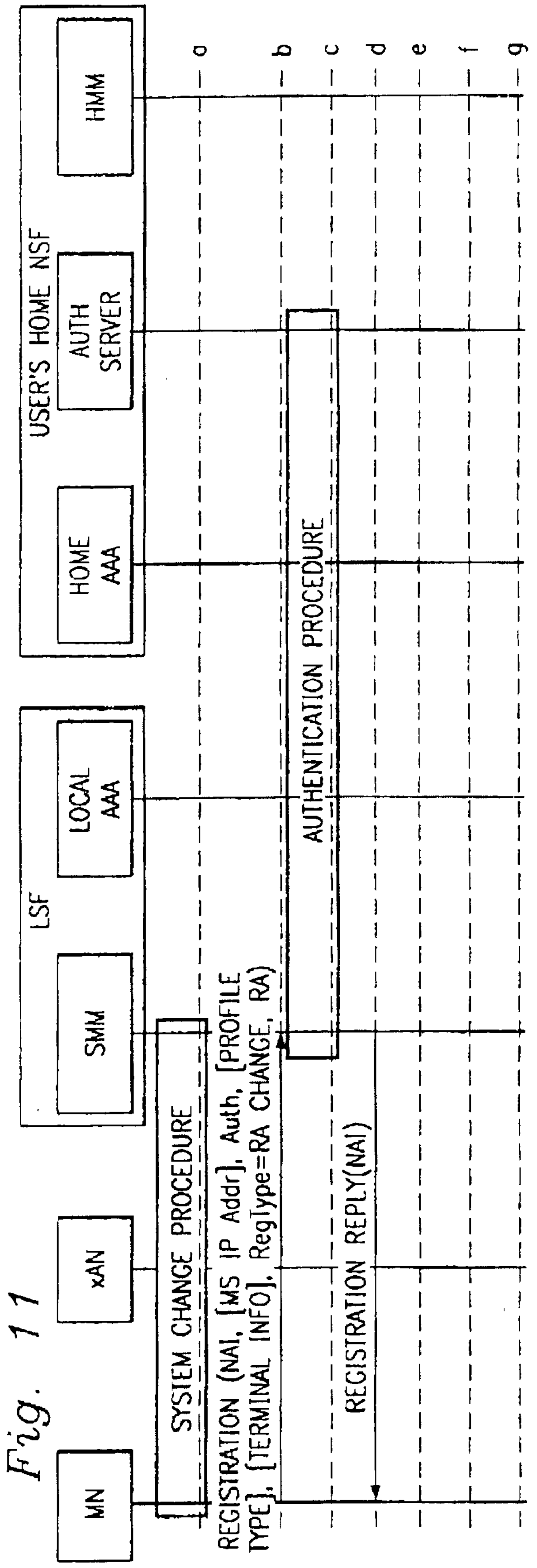
MN
xAN
LSF
SMM
LOCAL AAA
USER'S HOME NSF
HOME AAA
AUTH SERVER
HMM
SYSTEM CHANGE PROCEDURE
REGISTRATION (NAI, [MS IP Addr], Auth, [PROFILE TYPE], [TERMINAL INFO], RegType=RA CHANGE, RA)
AUTHENTICATION PROCEDURE
REGISTRATION REPLY(NAI)
a
b
c
d
e
f
g

Fig. 11

*Fig. 9*

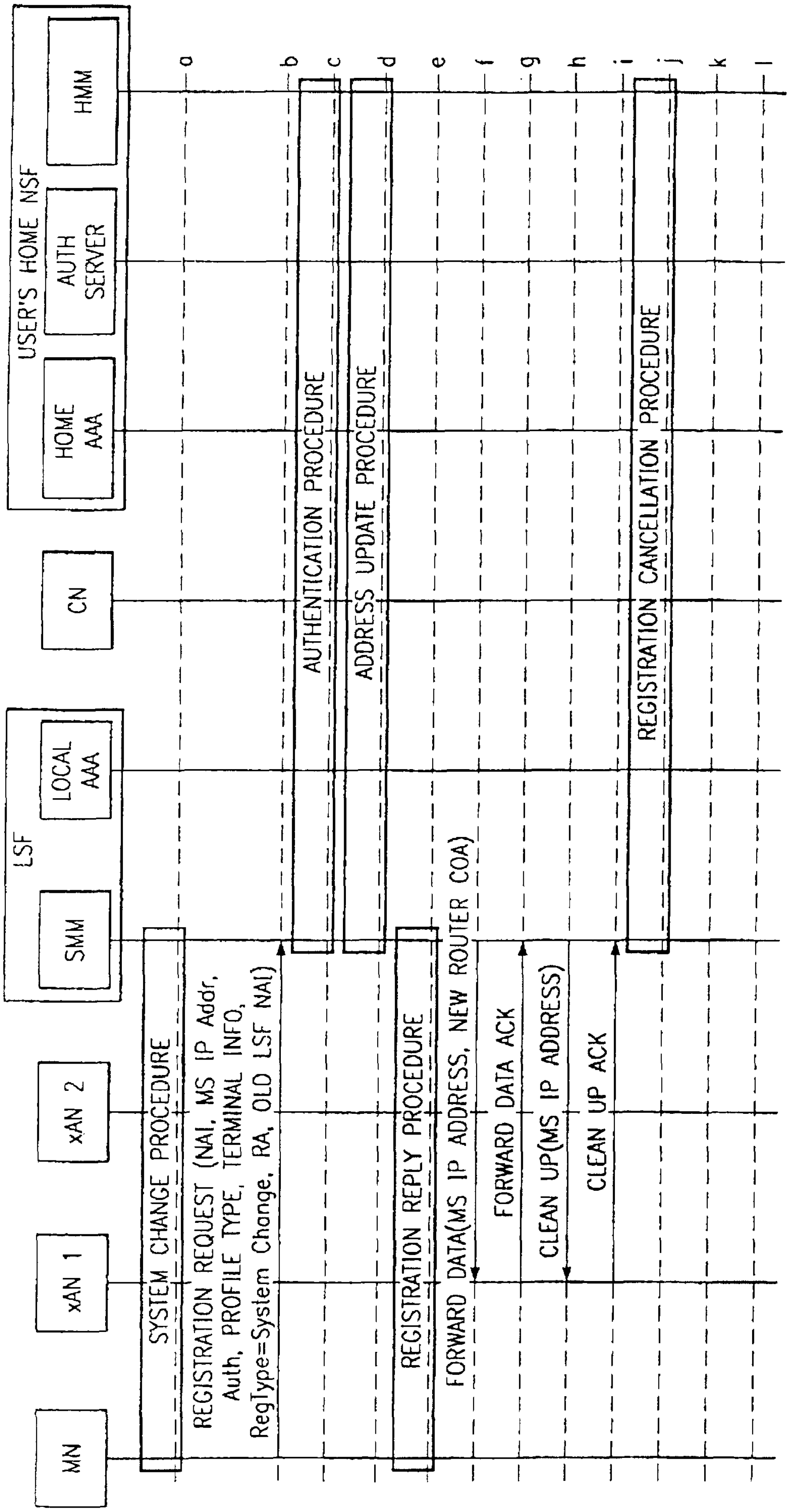
MN
xAN 1
xAN 2
LSF
SMM
LOCAL AAA
CN
USER'S HOME NSF
HOME AAA
AUTH SERVER
HMM
SYSTEM CHANGE PROCEDURE
REGISTRATION REQUEST (NAI, MS IP Addr, Auth, PROFILE TYPE, TERMINAL INFO, RegType=System Change, RA, OLD LSF NAI)
AUTHENTICATION PROCEDURE
ADDRESS UPDATE PROCEDURE
REGISTRATION REPLY PROCEDURE
FORWARD DATA(MS IP ADDRESS, NEW ROUTER COA)
FORWARD DATA ACK
CLEAN UP(MS IP ADDRESS)
CLEAN UP ACK
REGISTRATION CANCELLATION PROCEDURE
a
b
c
d
e
f
g
h
i
j
k
l

*Fig. 10*

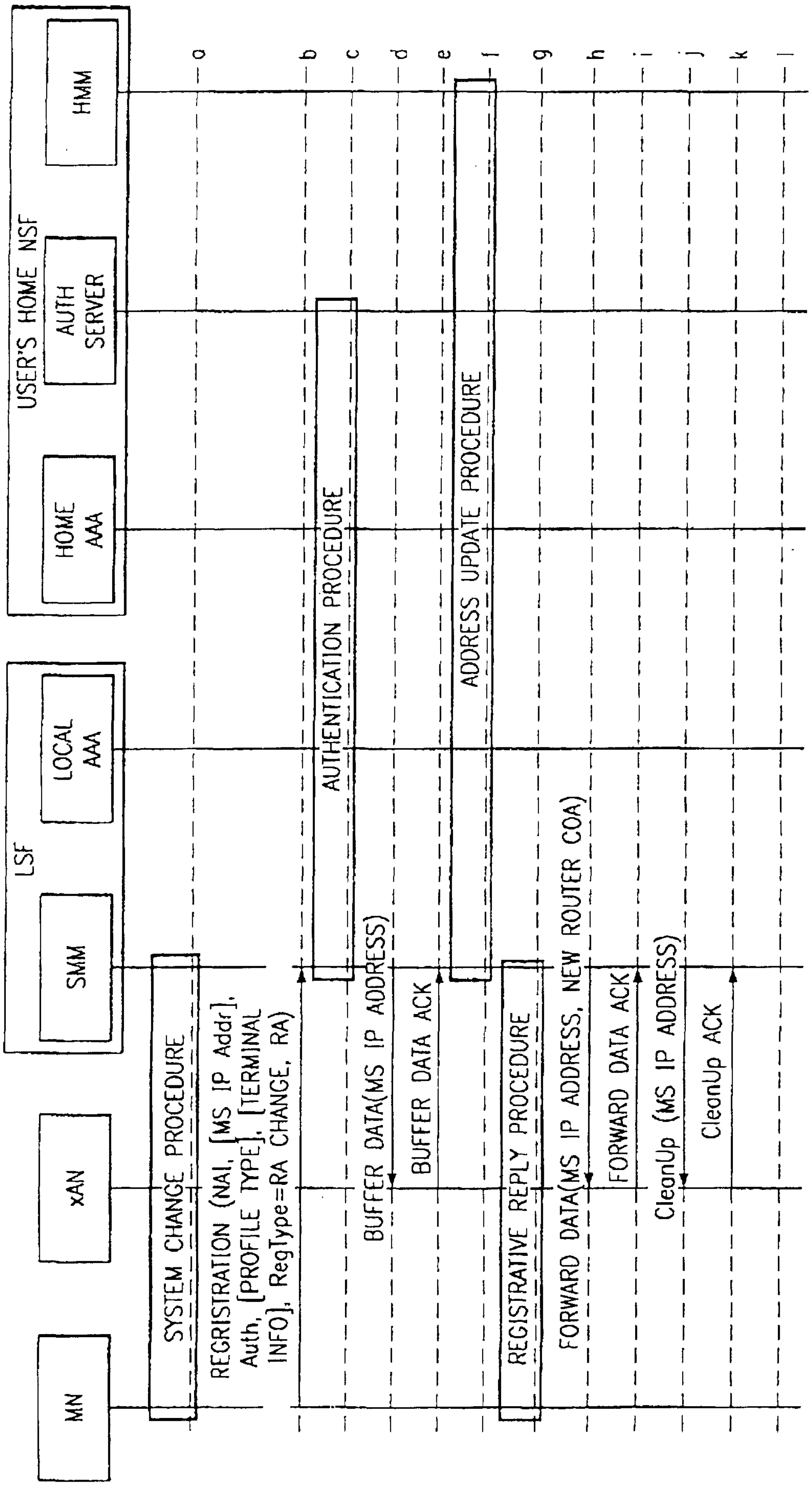

MN
xAN
LSF
SMM
LOCAL AAA
USER'S HOME NSF
HOME AAA
AUTH SERVER
HMM
SYSTEM CHANGE PROCEDURE
REGRISTRATION (NAI, [MS IP Addr], Auth, [PROFILE TYPE], [TERMINAL INFO], RegType=RA CHANGE, RA)
AUTHENTICATION PROCEDURE
BUFFER DATA(MS IP ADDRESS)
BUFFER DATA ACK
ADDRESS UPDATE PROCEDURE
REGISTRATIVE REPLY PROCEDURE
FORWARD DATA(MS IP ADDRESS, NEW ROUTER COA)
FORWARD DATA ACK
CleanUp (MS IP ADDRESS)
CleanUp ACK
a
b
c
d
e
f
g
h
i
j
k
l

Fig. 12

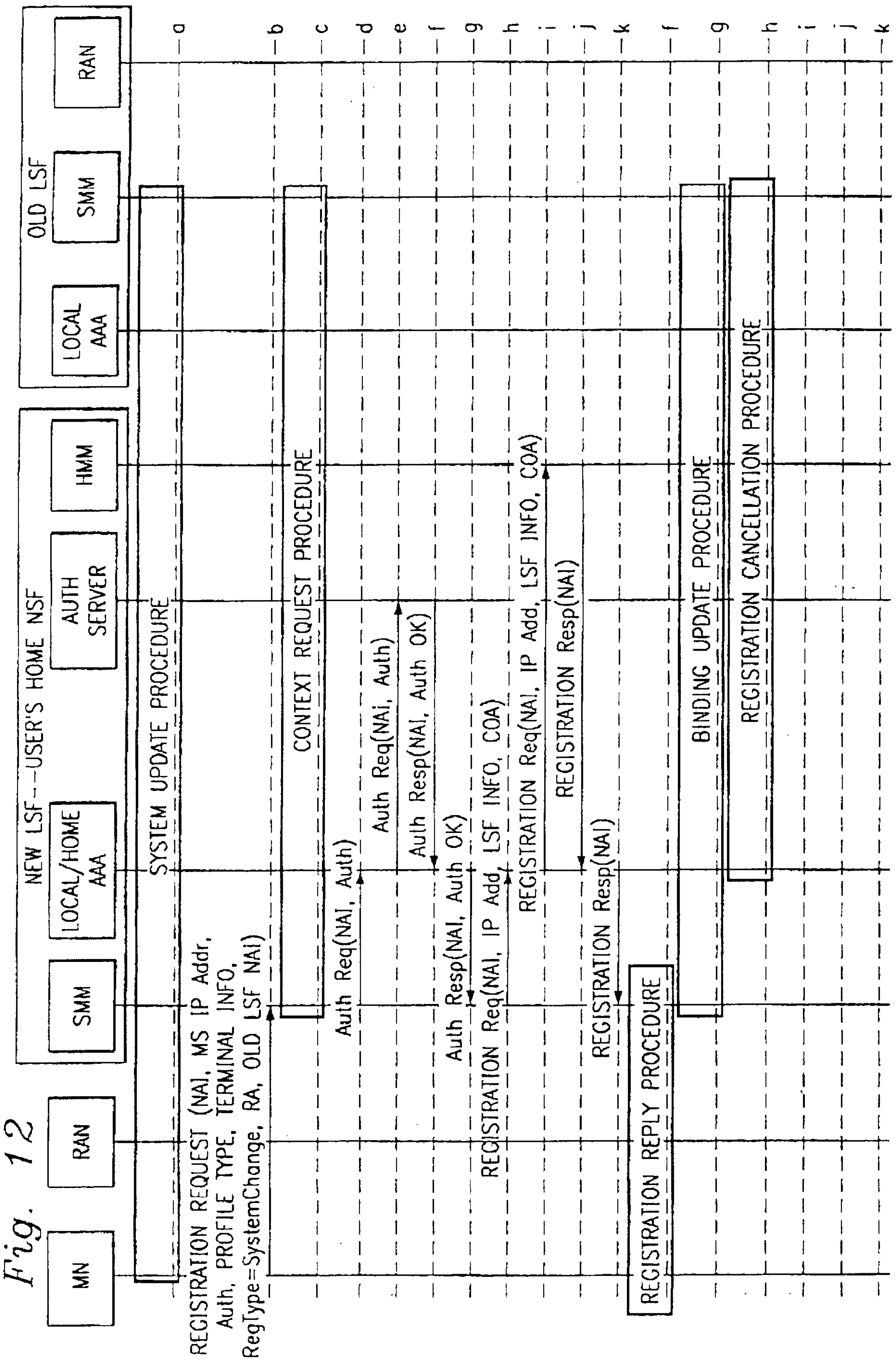

MN
RAN
NEW LSF--USER'S HOME NSF
SMM
LOCAL/HOME AAA
AUTH SERVER
HMM
OLD LSF
LOCAL AAA
SMM
RAN
SYSTEM UPDATE PROCEDURE
REGISTRATION REQUEST (NAI, MS IP Addr, Auth, PROFILE TYPE, TERMINAL INFO, RegType=SystemChange, RA, OLD LSF NAI)
CONTEXT REQUEST PROCEDURE
Auth Req(NAI, Auth)
Auth Req(NAI, Auth)
Auth Resp(NAI, Auth OK)
Auth Resp(NAI, Auth OK)
REGISTRATION Req(NAI, IP Add, LSF INFO, COA)
REGISTRATION Req(NAI, IP Add, LSF INFO, COA)
REGISTRATION Resp(NAI)
REGISTRATION Resp(NAI)
REGISTRATION REPLY PROCEDURE
BINDING UPDATE PROCEDURE
REGISTRATION CANCELLATION PROCEDURE
a
b
c
d
e
f
g
h
i
j
k
f
g
h
i
j
k

Fig. 13

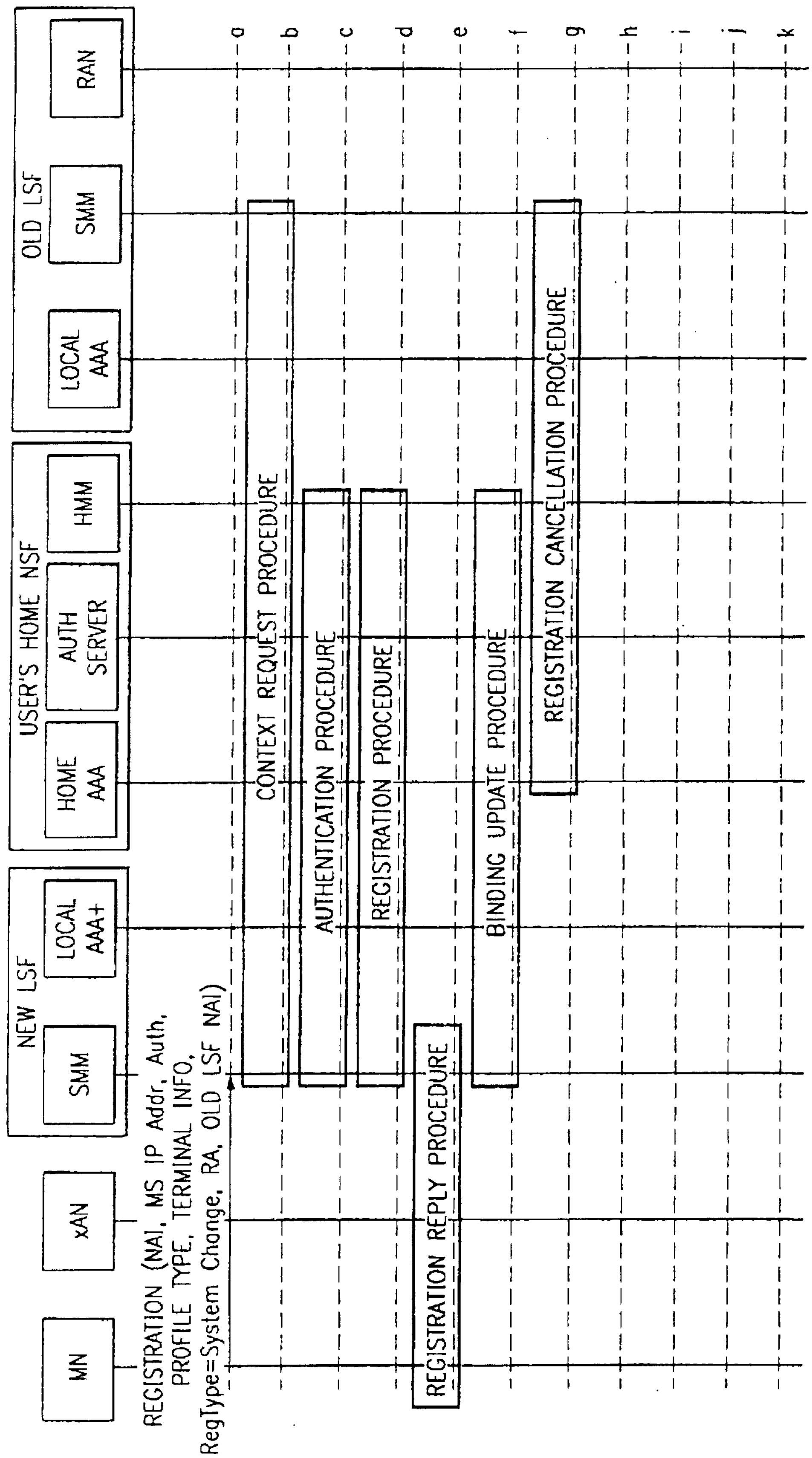
MN
xAN
NEW LSF
SMM
LOCAL AAA+
USER'S HOME NSF
HOME AAA
AUTH SERVER
HMM
OLD LSF
LOCAL AAA
SMM
RAN
REGISTRATION (NAI, MS IP Addr, Auth, PROFILE TYPE, TERMINAL INFO, RegType=System Change, RA, OLD LSF NAI)
CONTEXT REQUEST PROCEDURE
AUTHENTICATION PROCEDURE
REGISTRATION PROCEDURE
REGISTRATION REPLY PROCEDURE
BINDING UPDATE PROCEDURE
REGISTRATION CANCELLATION PROCEDURE
a
b
c
d
e
f
g
h
i
j
k

Fig. 14

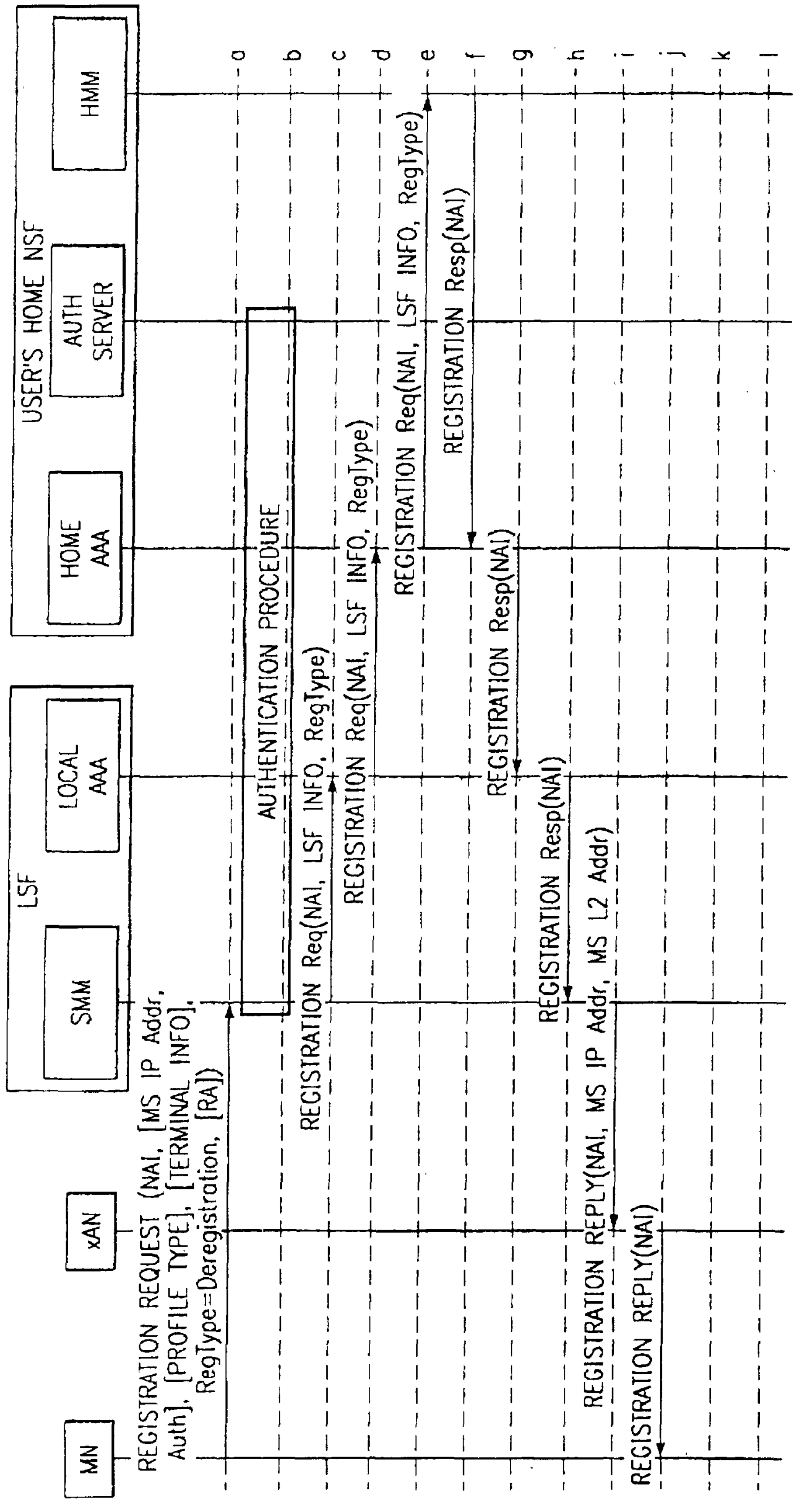
LSF
SMM
LOCAL AAA
USER'S HOME NSF
HOME AAA
AUTH SERVER
HMM
MN
xAN
REGISTRATION REQUEST {NAI, [MS IP Addr, Auth], [PROFILE TYPE], [TERMINAL INFO], RegType=Deregistration, [RA]}
AUTHENTICATION PROCEDURE
REGISTRATION Req(NAI, LSF INFO, RegType)
REGISTRATION Req(NAI, LSF INFO, RegType)
REGISTRATION Req(NAI, LSF INFO, RegType)
REGISTRATION Resp(NAI)
REGISTRATION Resp(NAI)
REGISTRATION Resp(NAI)
REGISTRATION Resp(NAI)
REGISTRATION REPLY(NAI, MS IP Addr, MS L2 Addr)
REGISTRATION REPLY(NAI)
a
b
c
d
e
f
g
h
i
j
k
l

*Fig. 15A*

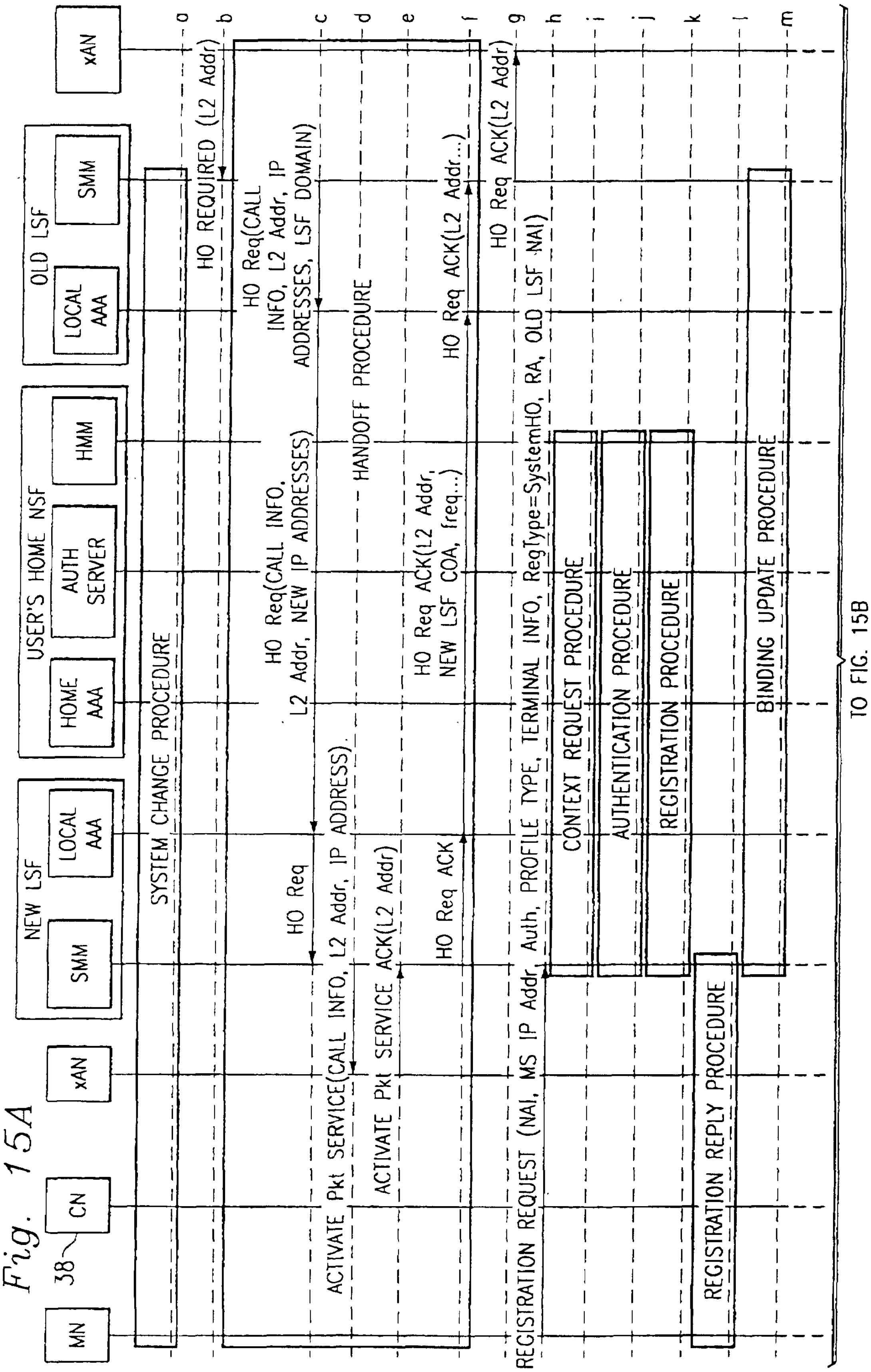
MN
38
CN
xAN
NEW LSF
SMM
LOCAL AAA
USER'S HOME NSF
HOME AAA
AUTH SERVER
HMM
OLD LSF
LOCAL AAA
SMM
xAN
SYSTEM CHANGE PROCEDURE
HO REQUIRED (L2 Addr)
HO Req(CALL INFO, L2 Addr, IP ADDRESSES, LSF DOMAIN)
HO Req(CALL INFO, L2 Addr, NEW IP ADDRESSES)
HO Req
ACTIVATE Pkt SERVICE(CALL INFO, L2 Addr, IP ADDRESS)
ACTIVATE Pkt SERVICE ACK(L2 Addr)
HANDOFF PROCEDURE
HO Req ACK(L2 Addr...)
HO Req ACK(L2 Addr, NEW LSF COA, freq...)
HO Req ACK
HO Req ACK(L2 Addr)
REGISTRATION REQUEST (NAI, MS IP Addr, Auth, PROFILE TYPE, TERMINAL INFO, RegType=SystemHO, RA, OLD LSF NAI)
CONTEXT REQUEST PROCEDURE
AUTHENTICATION PROCEDURE
REGISTRATION PROCEDURE
REGISTRATION REPLY PROCEDURE
BINDING UPDATE PROCEDURE
a
b
c
d
e
f
g
h
i
j
k
l
m
TO FIG. 15B

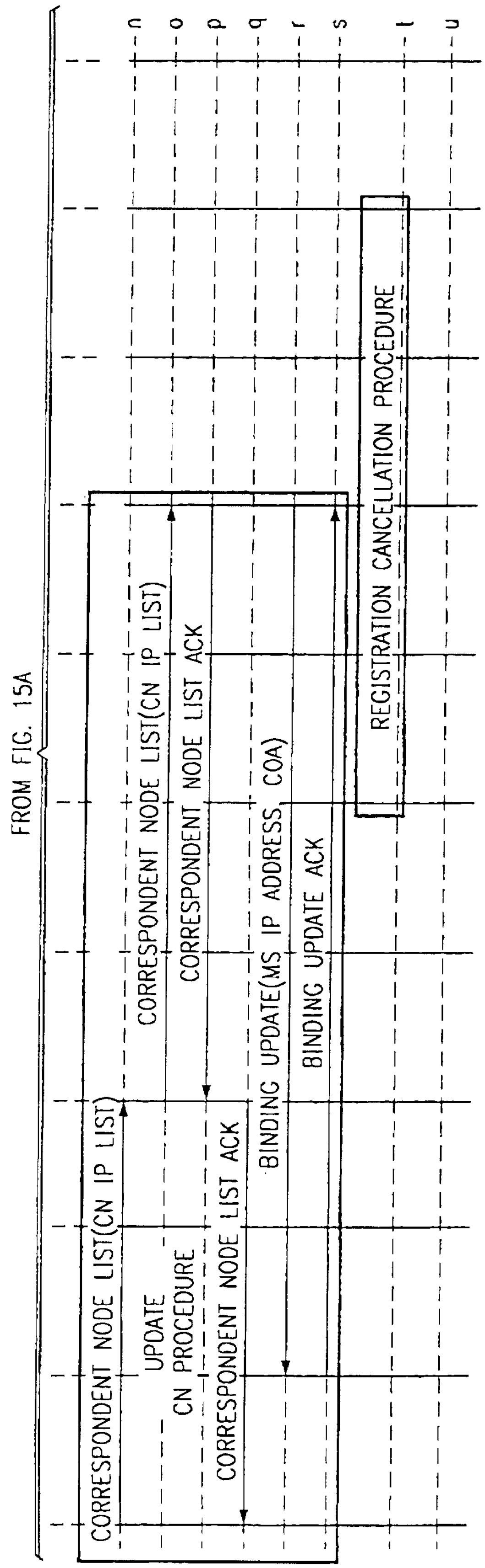
FROM FIG. 15A
n
o
p
q
r
s
t
u
CORRESPONDENT NODE LIST(CN IP LIST)
UPDATE
CN PROCEDURE
CORRESPONDENT NODE LIST ACK
CORRESPONDENT NODE LIST(CN IP LIST)
CORRESPONDENT NODE LIST ACK
BINDING UPDATE(MS IP ADDRESS, COA)
BINDING UPDATE ACK
REGISTRATION CANCELLATION PROCEDURE

*Fig. 15B*

Fig. 16

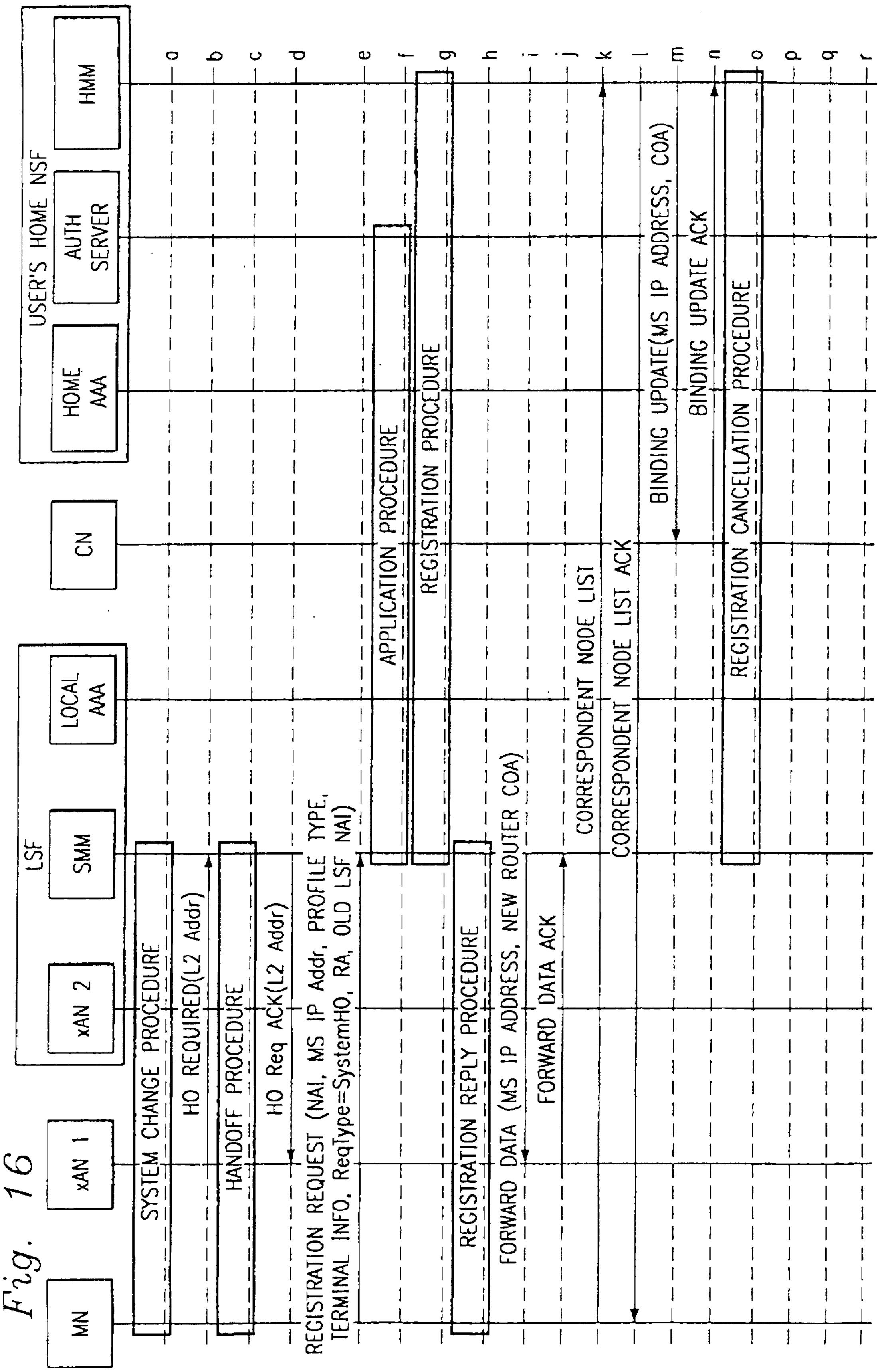
MN
xAN 1
xAN 2
LSF
SMM
LOCAL AAA
CN
USER'S HOME NSF
HOME AAA
AUTH SERVER
HMM
SYSTEM CHANGE PROCEDURE
HO REQUIRED(L2 Addr)
HANDOFF PROCEDURE
HO Req ACK(L2 Addr)
REGISTRATION REQUEST (NAI, MS IP Addr, PROFILE TYPE, TERMINAL INFO, ReqType=SystemHO, RA, OLD LSF NAI)
APPLICATION PROCEDURE
REGISTRATION PROCEDURE
REGISTRATION REPLY PROCEDURE
FORWARD DATA (MS IP ADDRESS, NEW ROUTER COA)
FORWARD DATA ACK
CORRESPONDENT NODE LIST
CORRESPONDENT NODE LIST ACK
BINDING UPDATE(MS IP ADDRESS, COA)
BINDING UPDATE ACK
REGISTRATION CANCELLATION PROCEDURE
a
b
c
d
e
f
g
h
i
j
k
l
m
n
o
p
q
r

Fig. 17

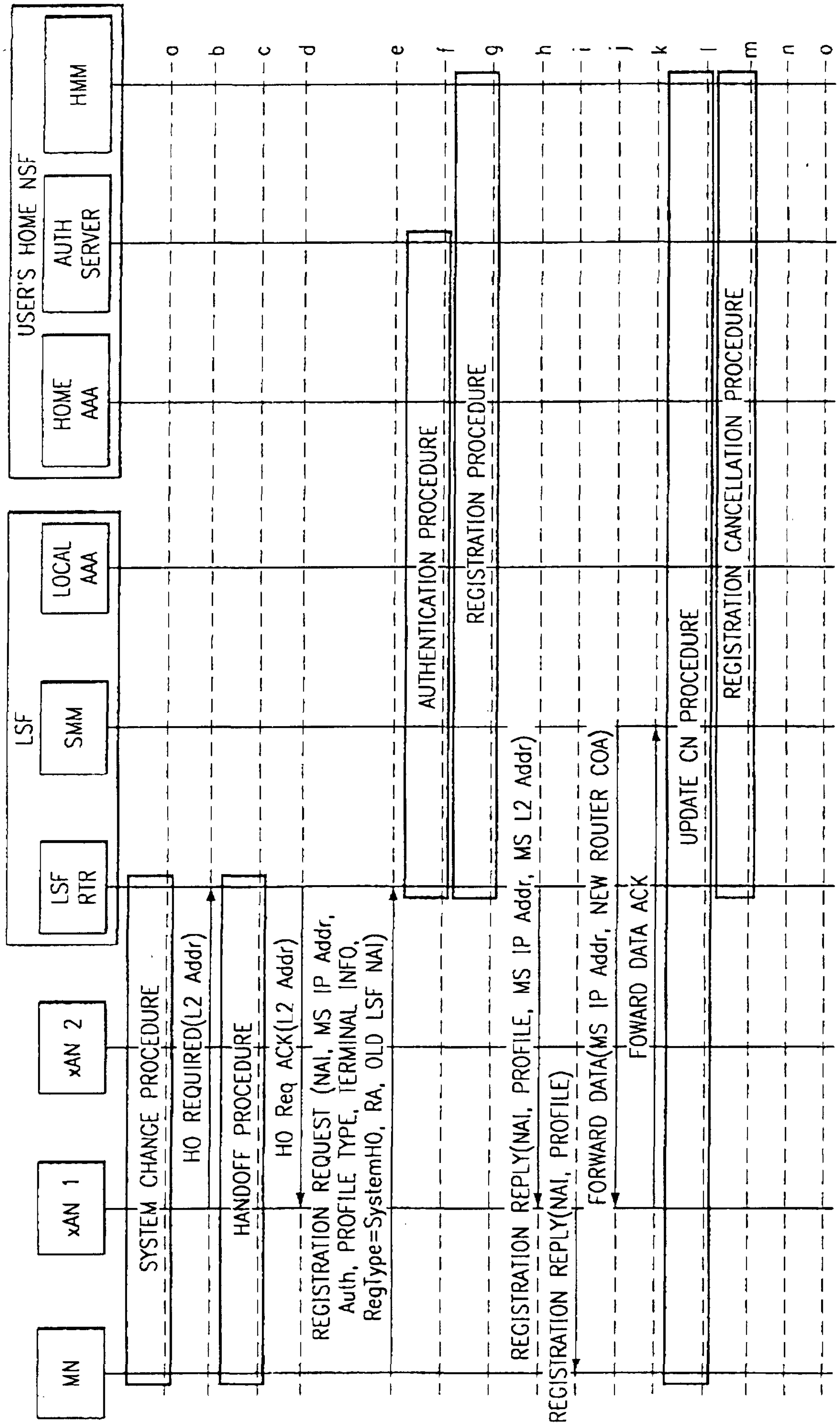
MN
xAN 1
xAN 2
LSF
LSF RTR
SMM
LOCAL AAA
USER'S HOME NSF
HOME AAA
AUTH SERVER
HMM
SYSTEM CHANGE PROCEDURE
HO REQUIRED(L2 Addr)
HANDOFF PROCEDURE
HO Req ACK(L2 Addr)
REGISTRATION REQUEST (NAI, MS IP Addr, Auth, PROFILE TYPE, TERMINAL INFO, RegType=SystemHO, RA, OLD LSF NAI)
AUTHENTICATION PROCEDURE
REGISTRATION PROCEDURE
REGISTRATION REPLY(NAI, PROFILE, MS IP Addr, MS L2 Addr)
REGISTRATION REPLY(NAI, PROFILE)
FORWARD DATA(MS IP Addr, NEW ROUTER COA)
FOWARD DATA ACK
UPDATE CN PROCEDURE
REGISTRATION CANCELLATION PROCEDURE
a
b
c
d
e
f
g
h
i
j
k
l
m
n
o

FIG. 18

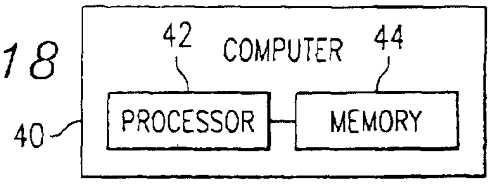
42
COMPUTER
44
PROCESSOR
MEMORY
40

FIG. 19

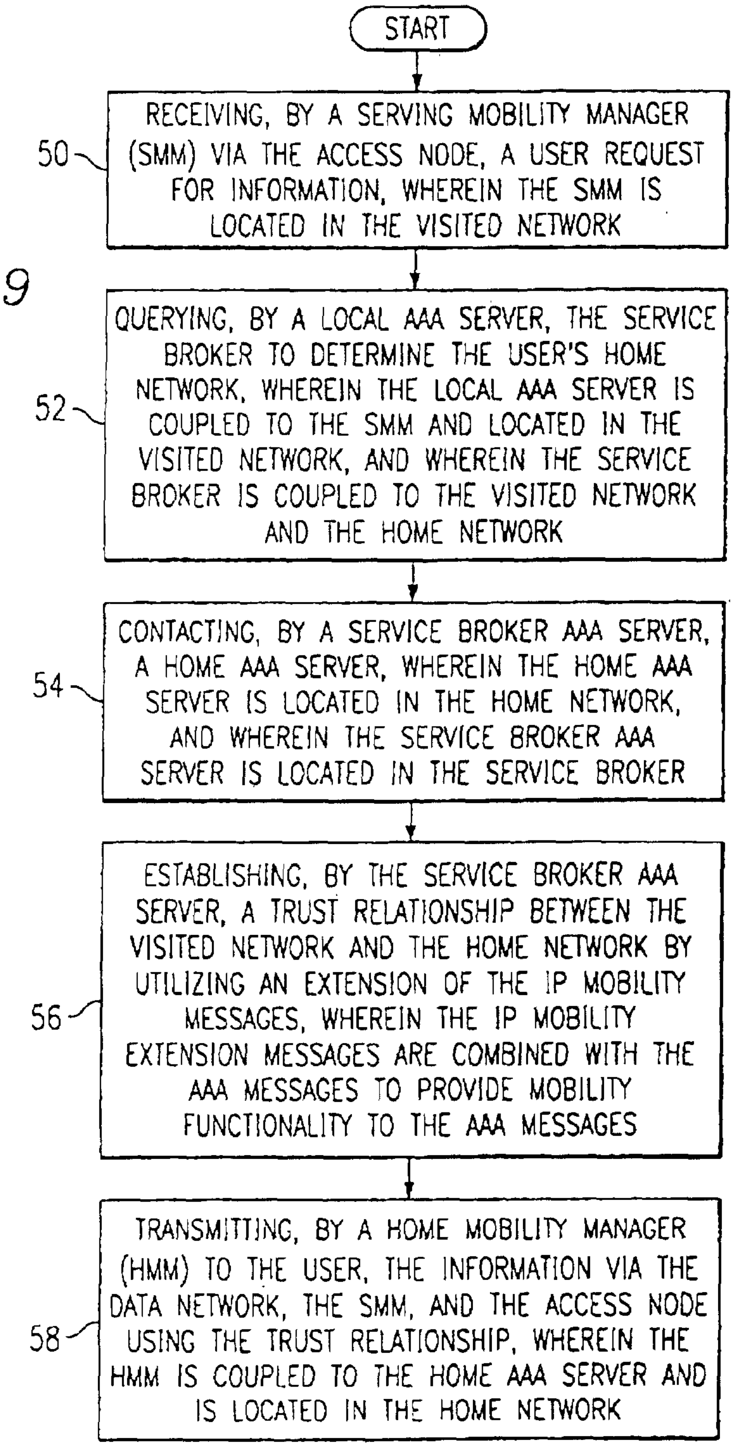
START
50
RECEIVING, BY A SERVING MOBILITY MANAGER (SMM) VIA THE ACCESS NODE, A USER REQUEST FOR INFORMATION, WHEREIN THE SMM IS LOCATED IN THE VISITED NETWORK
52
QUERYING, BY A LOCAL AAA SERVER, THE SERVICE BROKER TO DETERMINE THE USER'S HOME NETWORK, WHEREIN THE LOCAL AAA SERVER IS COUPLED TO THE SMM AND LOCATED IN THE VISITED NETWORK, AND WHEREIN THE SERVICE BROKER IS COUPLED TO THE VISITED NETWORK AND THE HOME NETWORK
54
CONTACTING, BY A SERVICE BROKER AAA SERVER, A HOME AAA SERVER, WHEREIN THE HOME AAA SERVER IS LOCATED IN THE HOME NETWORK, AND WHEREIN THE SERVICE BROKER AAA SERVER IS LOCATED IN THE SERVICE BROKER
56
ESTABLISHING, BY THE SERVICE BROKER AAA SERVER, A TRUST RELATIONSHIP BETWEEN THE VISITED NETWORK AND THE HOME NETWORK BY UTILIZING AN EXTENSION OF THE IP MOBILITY MESSAGES, WHEREIN THE IP MOBILITY EXTENSION MESSAGES ARE COMBINED WITH THE AAA MESSAGES TO PROVIDE MOBILITY FUNCTIONALITY TO THE AAA MESSAGES
58
TRANSMITTING, BY A HOME MOBILITY MANAGER (HMM) TO THE USER, THE INFORMATION VIA THE DATA NETWORK, THE SMM, AND THE ACCESS NODE USING THE TRUST RELATIONSHIP, WHEREIN THE HMM IS COUPLED TO THE HOME AAA SERVER AND IS LOCATED IN THE HOME NETWORK